(19) Europäisches Patentamt
European Patent Office
Office européen des brevets

(11) **EP 3 812 409 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **20202472.5**

(22) Anmeldetag: **19.10.2020**

(51) Internationale Patentklassifikation (IPC):
*C08G 18/10* (2006.01)    *C08G 18/32* (2006.01)
*C08G 18/42* (2006.01)    *C08G 18/44* (2006.01)
*C08G 18/48* (2006.01)    *C08G 18/65* (2006.01)
*C08G 18/66* (2006.01)    *C08G 18/73* (2006.01)
*C08G 18/76* (2006.01)    *C08G 18/50* (2006.01)

(52) Gemeinsame Patentklassifikation (CPC):
(C-Sets verfügbar)
**C08G 18/10; C08G 18/3206; C08G 18/4825;**
**C08G 18/5045; C08G 18/6511; C08G 18/6674;**
**C08G 18/7671**      (Forts.)

(54) **POLYURETHANPOLYMER MIT EINER HÄRTE VON KLEINER ODER GLEICH 60 SHORE A**

POLYURETHANE POLYMER HAVING A HARDNESS OF 60 SHORE A OR LOWER

POLYMÈRE POLYURÉTHANE À DURETÉ INFÉRIEURE OU ÉGALE À 60 SHORE A

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2019 EP 19204775**

(43) Veröffentlichungstag der Anmeldung:
**28.04.2021 Patentblatt 2021/17**

(73) Patentinhaber: **Covestro Deutschland AG**
**51373 Leverkusen (DE)**

(72) Erfinder:
• **SHEN, Yi**
**41539 Dormagen (DE)**
• **FUCHTE, Georg**
**51375 Leverkusen (DE)**
• **HERMANNS, Franz-Heinrich**
**41516 Grevenbroich (DE)**
• **REICHERT, Peter**
**41541 Dormagen (DE)**
• **LAUTER, Mathias**
**41539 Dormagen (DE)**

(74) Vertreter: **Levpat**
**c/o Covestro AG**
**Gebäude 4825**
**51365 Leverkusen (DE)**

(56) Entgegenhaltungen:
**EP-A1- 3 772 519    EP-A2- 1 757 632**
**CN-A- 101 875 713    CN-A- 106 750 159**
**US-A- 3 915 923**

(52) Gemeinsame Patentklassifikation (CPC): (Forts.)

C-Sets
**C08G 18/10, C08G 18/3206;**
**C08G 18/10, C08G 18/7671**

C-Sets
**C08G 18/10, C08G 18/3206;**
**C08G 18/10, C08G 18/7671**

**Beschreibung**

Die vorliegende Erfindung betrifft die Verwendung eines neuen thermoplastisch verarbeitbaren Polyurethanpolymers mit einer Härte von ≤ 60 Shore A und Artikel enthaltend dieses Polyurethanpolymer.

Thermoplastisch verarbeitbare Polyurethanpolymere (TPU) sind seit langem bekannt. Sie sind von großer technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU's werden aus linearen Polyolen, meist Polyether oder Polyester, organischen Diisocyanaten und kurzkettigen Diolen (Kettenverlängerer) aufgebaut. Die TPU können kontinuierlich oder diskontinuierlich hergestellt werden. Die bekanntesten technischen Herstellverfahren, die auch technisch genutzt werden, sind das Bandverfahren (GB 1057018 A) und das Extruderverfahren (DE 1964834 A-1 und DE 2059570 A-1).

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1: 12. Durch die Menge an Kettenverlängerer kann in einem weiten Bereich die Härte der TPU eingestellt werden. Hierdurch ergeben sich Produkte im Härtebereich von ca. 40 Shore A bis ca. 85 Shore D.

Zur Verbesserung des Verarbeitungsverhaltens, insbesondere der Zykluszeit, sind über den gesamten Härtebereich von ca. 40 Shore A bis ca. 85 Shore D solche TPU von besonderem Interesse, die bei Spritzgussartikeln nach dem Verarbeitungsvorgang eine sehr hohe Verfestigungsgeschwindigkeit aufweisen. Besonders bei harten TPU und weichen TPU kommt es häufig zu Problemen bei der chemischen Ankopplung von Hart- und Weichsegment aufgrund zu hoher Polaritätsunterschiede dieser Phasen. Dadurch kann das gesamte Potenzial der mechanischen Eigenschaften und der Verarbeitungseigenschaften oft nicht vollständig ausgeschöpft werden. Es hat nicht an Versuchen gefehlt, durch spezielle Verfahren diese Nachteile zu beheben.

Ein Verfahren zur Herstellung von thermoplastisch verarbeitbaren Polyurethanen wird von W. Bräuer u.a. beschrieben (EP-A 1757632). Durch ein mehrstufiges OH-Prepolymer Verfahren wird die Homogenität der TPU verbessert. Die verbesserte Homogenität verlangsamt jedoch die Verfestigungsgeschwindigkeit der TPU. Diese Patentanmeldung. offenbart ein Verfahren zur Herstellung thermoplastisch verarbeitbarer Polyurethanelastomere (TPU) mit verbessertem Verarbeitungsverhalten in einer mehrstufigen Umsetzung umfassend die Schritte: A) Mischen eines oder mehrerer linearer hydroxylterminierter Polyole a) mit einem gewichtsmittlerem Molekulargewicht von 500 bis 5000 mit einem organischen Diisocyanat b) in einem Äquivalenzverhältnis von NCO-reaktiven Gruppen zu NCO-Gruppen von 1,1:1 bis 5,0:1 in einem Mischaggregat mit hoher Scherenergie, B) Umsetzung der in Stufe A) hergestellten Reaktionsmischung bei Temperaturen von 〉 80°C bis zu einem Umsatz von 〉 90%, bezogen auf die Komponente b), zu einem OH-terminierten Prepolymer, C) Mischen des in Stufe B) hergestellten OH-Prepolymers mit einem oder mehreren Kettenverlängeren c) mit einem Molekulargewicht von 60 bis 490, D) Umsetzen der in der Stufe C) hergestellten Mischung mit einer Menge an Komponente b) zum thermoplastischen Polyurethan, so dass unter Berücksichtigung aller Komponenten ein Äquivalenzverhältnis von NCO-Gruppen zu NCO-reaktiven Gruppen von 0,9:1 bis 1,1:1 eingestellt wird, wobei die Schritte A) bis D) gegebenenfalls in Gegenwart von Katalysatoren und gegebenenfalls unter Zugabe von 0 bis 20 Gew.%, bezogen auf die Gesamtmenge TPU, Hilfs- und Zusatzstoffen durchgeführt werden.

Ein Verfahren zur Herstellung von weichen, gut entformbaren thermoplastischen Polyurethanelastomeren mit geringer Schwindung wird von W. Bräuer u.a. beschrieben (EP-A 1338614). Durch Weichsegment-Vorverlängerung wurde das Entformungsverhalten von TPU zwischen 45 Shore A und 65 Shore A verbessert. Bei sehr hohen Härten hat dieses Verfahren deutlich Nachteile, weil es zu Unverträglichkeiten der Hart- und Weichphase kommt und somit eine gute Ankopplung dieser Phase nicht mehr stattfinden kann. Dadurch wird das für gute mechanische Eigenschaften notwendige hohe Molekulargewicht der TPU nicht erreicht. Auch ist dieses Verfahren in der Praxis wegen zu hohen und schwankenden Viskositäten der Prepolymerstufe sehr instabil und funktioniert unter 60 Shore A nicht mehr zufriedenstellend, sodass häufig Extruderstillstände vorkommen.

Weitere weiche thermoplastische Polyurethanelastomere, ein Verfahren zu ihrer Herstellung und Verwendung wird ebenfalls von W. Bräuer u.a. beschrieben (EP-A 1932863). Durch die Kombination von verschiedenen Polyesterpolyolen und Kettenverlängerern wurden TPU mit guter Entformbarkeit erhalten. Jedoch werden dabei keine TPU auf Basis von Polyethern beschrieben. Bei weichmacherfreien TPU nach diesem Verfahren mit einer Härte kleiner als 60 Shore A hat man bisher nur eine sehr langsame Verfestigung nach der Spritzgießverarbeitung erzielt.

US 3,915,923 offenbart ein Multischritt-Verfahren zur Herstellung eines thermoplastischen Polycaprolacton-Polyurethans mit hohem Molekulargewicht, bei dem (1) ein NCO-terminiertes Polycaprolacton hergestellt wird, (2) mit einem stöchiometrischen Überschuss eines Diols kettenverlängert wird und (3) inkrementell Diisocyanat mit dem Produkt aus (2) reagiert wird, bis die gewünschte Viskosität erreicht wird.

CN 101 875 713 A betrifft ein Herstellungsverfahren für ein Polyurethanharz mit den Schritten: (a) Prepolymerisation durch Erhitzen einer Mischung eines Polyols mit einer passenden Menge an 4,4'-MDI und DMF als Lösungsmittel, (b) Hinzufügen von Hilfsstoffen und Kettenverlängerern unter weiterem Erhitzen, um das Prepolymer mit den Kettenverlängerern umzusetzen, (c) Hinzufügen von 4,4'-MDI zum Weiterführen der Reaktion, wobei Lösungsmittel und Hilfsstoffe weiterhin hinzugefügt werden und die Menge an Lösungsmittel 64 bis 76 Gewichts-% beträgt sowie (d) Überwachen der Viskosität des Harzes und Hinzufügen eines Kettenabbrechers, wenn die Viskosität 1.0 * 105 bis 2.8 * 105 mPa*s (25 °C) beträgt und Nachreaktion für 0.3 bis 3 Stunden.

CN 106 750 159 A beschreibt ein Verfahren zur Herstellung eines Polyurethanharzes für abriebsfeste Arbeitsschutzhandschue mit den Schritten: (I) Prepolymerisation von Polyglycol und Isocyanat in DMF mit einem molaren Verhältnis von Isocyanat zu Polyglycol von 0.5:1 bis 2.0:1, (II) Hinzufügen von Hilfsstoffen und einem Diol-Kettenverlängerer unter Erhitzen, um die Reaktion des Prepolymers mit dem Diol-Kettenverlängerer fortzuführen, (III) Hinzufügen von Isocyanat, um die Reaktion fortzuführen, sowie Hinzufügen von Lösungsmitteln und Hilfsstoffen, (IV) Überwachen der Viskosität des Harzes und Hinzufügen eines Kettenabbrechers, wenn die Viskosität 2.2 * 105 bis 2.5 * 105 mPa*s (25 °C) beträgt.

Aufgrund der hohen Anwendungsbreite von TPUs und insbesondere weichen TPUs, d.h. TPUs mit einer Shore Härte von 60 Shore A, besteht ein hoher Bedarf entsprechend maßgeschneiderte weiche TPUs bereitzustellen. Weiterhin besteht ein Bedarf an Zusammensetzungen von weichen TPUs die keinen Weichmacher enthalten, aber trotzdem elastisch und mechanisch belastbar sind.

Aufgabe der Erfindung war es daher, ein neues thermoplastisch verarbeitbares Polyurethanpolymer mit einer Härte von ≤ 60 Shore A bereitzustellen, welches gute Verarbeitungseigenschaften und gute mechanische Eigenschaften aufweist. Weiterhin war es Aufgabe der Erfindung eine weichmacherfreie Zusammensetzung eines thermoplastisch verarbeitbaren Polyurethanpolymers mit einer Härte von ≤ 60 Shore A bereitzustellen.

Diese Aufgabe wurde überraschend gelöst durch die Verwendung gemäß Anspruch 1. Die Erfindung betrifft weiterhin eine Dichtung gemäß Anspruch 6, einen Vibrationsdämpfer, Schwingungsisolator und / oder Verbindungsisolator gemäß Anspruch 8, einen Handgriff gemäß Anspruch 10 und ein Garn und / oder Vliesstoff gemäß Anspruch 12.

Die Verwendung eines thermoplastisch verarbeitbaren Polyurethanpolymers mit einer Härte von ≤ 60 Shore A bestimmt gemäß DIN ISO 7619-1 (2012-02-01) oder einer weichmacherfreien Zusammensetzung enthaltend mindestens ein thermoplastisch verarbeitbares Polyurethanpolymer mit einer Härte von ≤ 60 Shore A bestimmt gemäß DIN ISO 7619-1 (2012-02-01) zur Herstellung von

a) Dichtungen,

b) Vibrationsdämpfer, Schwingungsisolatoren und / oder Verbindungsisolatoren,

c) Handgriffen, und

d) Garn und / oder Vliesstoffen,

wobei das thermoplastisch verarbeitbare Polyurethanpolymer mit einer Härte von ≤ 60 Shore A erhältlich ist oder erhalten wird durch Umsetzen der folgenden Komponenten

(A) einem oder mehreren im Wesentlichen linearen Polyetherpolyolen und / oder Polyesterpolyolen, wobei die Gesamtmenge der Komponente (A) ein mittleres Molekulargewicht im Bereich von 500 g/mol bis 5000 g/mol aufweist, wobei Mn aus der OH-Zahl errechnet wurde, die gemäß DIN53240 bestimmt wurde,

(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,

(C) einem oder mehreren linearen Diolen mit einem Molekulargewicht von 62 g/mol bis 500 g/mol,

(D) gegebenenfalls in Gegenwart von einem oder mehreren Katalysatoren,

(E) gegebenenfalls in Gegenwart von einem oder mehreren Additiven, Hilfs- und / oder Zusatzstoffen, und

(F) gegebenenfalls in Gegenwart von einem oder mehreren monofunktionellen Kettenabbrechern, ist dadurch gekennzeichnet, dass die Umsetzung der Komponenten lösungsmittelfrei erfolgt und die folgenden Schritte umfasst oder daraus besteht:

1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,

2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),

3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt.

Die Shore Härte wurde nach DIN ISO 7619-1 (2012-02-01) bestimmt.

Die Polyurethanpolymere weisen bessere Eigenschaften auf, als solche die nach aus dem Stand der Technik bekannten Verfahren hergestellt wurden. Insbesondere härten die Polyurethanpolymere schneller aus und weisen eine höhere Abriebfestigkeit, sehr niedrige Druckverformungsrestwerte bei unterschiedlichen Temperaturen, eine hohe mechanische Dämpfung (tan D), verbesserte Hydrolysestabilität, gute Alterungsbeständigkeit, eine verbesserte Zugfestigkeit sowie eine gute Haftung zu anderen Polymeren auf. Darüber hinaus verfestigt das Material schneller und lässt sich so beim Spritzgießen früher und leichter entformen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Gesamtstoffmenge der Polyole der Komponente A) aus linearen Polyolen bestehen.

Unter "lösungsmittelfrei" im Rahmen der vorliegenden Erfindung wird die Umsetzung der Komponenten A, B und C im Wesentlichen ohne zusätzliche Verdünnungsmittel, wie beispielsweise organische Lösungsmittel oder Wasser verstanden, d.h. die Komponenten A, B und C werden bevorzugt unverdünnt miteinander zur Reaktion gebracht. Die Komponenten D, E und / oder F können gegebenenfalls in geeigneten Verdünnungsmittel vorliegen und als Lösung zu den Komponenten A, B und / oder C zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% und am Bevorzugtesten 0 Gew.-% bezogen auf das Gesamtgewicht der Reaktionsmischung beträgt. Unter einem Lösungsmittel wird dabei eine Substanz verstanden, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert. "Im Wesentlichen" bedeutet in diesem Zusammenhang, dass der Anteil an Lösungsmittel höchstens 10 Gew.-%, vorzugsweise höchstens 5 Gew.-%, besonders bevorzugt höchstens 1 Gew.-%, noch bevorzugter höchstens 0,1 Gew.-%, noch mehr bevorzugter höchstens 0,01 Gew.-% und am Bevorzugtesten 0 Gew.-% bezogen auf das Gesamtgewicht der Reaktionsmischung beträgt.

Bevorzugt bedeuten erfindungsgemäß die Ausdrücke "umfassend" oder "enthaltend", "im Wesentlichen bestehend aus" und besonders bevorzugt "bestehend aus".

Die Härte der thermoplastisch verarbeitbaren Polyurethane kann durch Wahl des molaren Verhältnisses von Komponente A) zu Komponente C) von 35 Shore A bis 60 Shore A eingestellt werden.

Die Mengen der Reaktionskomponenten für die NCO-funtionelle Prepolymerbildung in Schritt 1) werden so gewählt, dass das NCO/OH-Verhältnis von Polyisocyanat zu Polyol in Schritt 1) 1,1:1 bis 5,0:1 beträgt.

Die Komponenten werden innig gemischt und die NCO-Prepolymerreaktion in Schritt 1) wird vorzugsweise zum vollständigen Umsatz (bezogen auf die Polyolkomponente) gebracht.

Anschließend erfolgt die Einmischung von mindestens Komponente (C) als Kettenverlänger (Schritt 2) zu einem OH-funktionellen Prepolymer.

Danach wird in Schritt 3) die Restmenge der Komponente (B) hinzugegeben, wobei ein NCO/OH - Verhältnis von 0,9:1 bis 1,2:1 eingehalten wird. Bevorzugt wird in Schritt 3) die gleiche Komponente (B) eingesetzt wie in Schritt 1).

In einer bevorzugten Ausführungsform des thermoplastisch verarbeitbaren Polyurethans liegt im Verfahrensschritt 2) ein molares Verhältnis von NCO-funktionellen Prepolymer zu Komponente (C) von kleiner 1,0 vor. Die Komponente (C) liegt somit im molaren Überschuss vor.

Als Komponente (A) eignen sich alle im Wesentlichen linearen Polyesterpolyole und / oder Polyetherpolyole die dem Fachmann bekannt sind und ein mittleres Molekulargewicht Mn von größer 500 g/mol aufweisen. Erfindungsgemäß weist die Gesamtmenge der Komponente A ein mittleres Molekulargewicht Mn im Bereich von 500 g/mol bis 5000 g/mol auf, wobei Mn aus der OH-Zahl errechnet wurde, die gemäß DIN53240 bestimmt wurde. Es ist also möglich, dass einige der Polyole ein Mn von größer 5000 g/mol aufweisen, solange das Mn der Gesamtmenge der Komponente A im Bereich von 500 g/mol bis 5000 g/mol liegt. Die Molekulargewichte Mn solcher Polyole werden üblicherweise über deren OH-Zahl (Hydroxylzahl) errechnet, was dem Fachmann bekannt ist. Die OH-Zahl wird nach der DIN 53240 titrimetisch bestimmt. Aus der OH-Zahl (OHZ) lässt sich nach folgender Formel das Molgewicht von Polyolen ausrechnen:

$$\mathrm{Mn} = 1000\mathrm{mg/g} \cdot \frac{z \cdot 56.106\mathrm{g/Mol}}{\mathrm{OHZ[mg/g]}}$$

Dabei steht z für die Anzahl an OH-Gruppen im Makromolekül. Für ein lineares Diol ist z = 2. Produktionsbedingt enthalten diese oft kleine Mengen an nichtlinearen Verbindungen.

Geeignete Polyesterdiole a) können beispielsweise aus Dicarbonsäuren mit 2 bis 12 Kohlenstoffatomen, vorzugsweise 2 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, Dodecandisäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie beispielsweise Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol, 1,2-Propandiol und Dipropylenglykol. Je nach den gewünschten Eigenschaften können die mehrwertigen Alkohole allein oder gegebenenfalls in Mischung untereinander verwendet werden. Geeignet sind ferner Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterpolyole werden vorzugsweise Ethandiol-polyadipate, 1,4-Butandiol-polyadipate, 1,6-Hexandiol-polyadipate, Ethandiol-1,4-butandiol-polyadipate, 1,6-Hexandiolneopentylglykol-polyadipate, 1,6-Hexandiol-1,4-butandiol-polyadipate und Polycaprolactone verwendet. Die Polyesterdiole weisen Molekulargewichte Mn im Bereich von 500 bis 5000 g/mol, vorzugsweise im Bereich von 600 bis 3500 g/mol und besonders bevorzugt im Bereich von 800 bis 3000 g/mol. Sie können einzeln oder in Form von Mischungen untereinander zur Anwendung kommen, wobei Mn aus der OH-Zahl errechnet wurde, die gemäß DIN53240 bestimmt wurde.

Geeignete Polyetherdiole b) können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mn von 500 bis 5000 g/mol, vorzugsweise im Bereich von 750 bis 5000 g/mol und ganz besonders bevorzugt im Bereich von 900 bis 4200 g/mol. Sie können sowohl einzeln als auch in Form von Mischungen untereinander zur Anwendung kommen, wobei Mn aus der OH-Zahl errechnet wurde, die gemäß DIN53240 bestimmt wurde.

In einer weiteren bevorzugten Ausführungsform des thermoplastisch verarbeitbaren Polyurethans werden als Komponente A Polyesterdiole mit einer Schmelztemperatur von ≤ 50 °C, Polyetherpolyole und / oder Mischungen aus mindestens 2 hieraus eingesetzt, vorzugsweise werden als Komponente A Polyetherpolyole, besonders bevorzugt Polyethylendiolether, Polypropylendiolether, Polytetramethylenglykol, und / oder Mischungen aus mindestens 2 hieraus, noch bevorzugter Polypropylendiolether eingesetzt.

In einer weiteren bevorzugten Ausführungsform des thermoplastisch verarbeitbaren Polyurethans weisen die Polyetherpolyole ein zahlenmittleres Molekulargewichte Mn im Bereich von 750 bis 5000 g/mol und vorzugsweise im Bereich von 900 bis 4200 g/mol auf, wobei Mn aus der OH-Zahl errechnet wurde, die gemäß DIN53240 bestimmt wurde.

In einer weiteren bevorzugten Ausführungsform des thermoplastisch verarbeitbaren Polyurethans werden als Komponente (A) ein oder mehrere Polyesterdiole mit einem mittleren Molekulargewicht Mn im Bereich von 500 g/mol bis 5000 g/mol, vorzugsweise im Bereich von 600 g/mol bis 3500 g/mol und besonders bevorzugt im Bereich von 800 g/mol bis 3000 g/mol, eingesetzt, wobei Mn aus der OH-Zahl errechnet wurde, die gemäß DIN53240 bestimmt wurde.

In einer weiteren bevorzugten Ausführungsform des thermoplastisch verarbeitbaren Polyurethans werden als Komponente (A) ein oder mehrere Polyetherdiole mit einem mittleren Molekulargewicht Mn im Bereich von 500 g/mol bis 5000 g/mol, vorzugsweise im Bereich von 750 g/mol bis 5000 g/mol und besonders bevorzugt im Bereich von 900 g/mol bis 4200 g/mol, eingesetzt, wobei Mn aus der OH-Zahl errechnet wurde, die gemäß DIN53240 bestimmt wurde.

In einer weiteren bevorzugten Ausführungsform des thermoplastisch verarbeitbaren Polyurethans ist das eine oder sind die mehreren Polyetherdiole unabhängig voneinander Polyether auf Basis eines Polymerisats von Ethylenoxid oder Propylenoxyd oder einem Gemisch aus verschiedenen Polymerisaten dieser Rohstoffe.

In einer weiteren bevorzugten Ausführungsform des thermoplastisch verarbeitbaren Polyurethans ist das eine oder sind die mehreren Polyetherdiole unabhängig voneinander Polyether auf Basis eines Polymerisats von Tetrahydrofuran.

Bei den als Komponente (B) eingesetzten Diisocyanaten ist es unerheblich, ob die Diisocyanate mittels Phosgenierung oder nach einem phosgenfreien Verfahren erhalten wurden. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei das 1,6-Hexamethylendiamin und das 1,5-Pentamethylendiamin aus biologischen Quellen, vorzugsweise durch bakterielle Fermentation, gewonnen werden.

In einer weiteren bevorzugten Ausführungsform des thermoplastisch verarbeitbaren Polyurethans werden als Komponente (B) 2-Methyl-1,5-diisocyanatopentan, 1,6-Diisocyanatohexan (HDI), 2,2,4-Trimethyl-1,6-diisocyanatohexan, Diphenylmethandiisocyanat-Isomerengemische mit einem 4,4'-Diphenylmethandiisocyanatgehalt von >96 Gew.-% und / oder Mischungen aus mindestens 2 hieraus eingesetzt, vorzugsweise werden Diphenylmethandiisocyanat-Isomerengemische mit einem 4,4'-Diphenylmethandiisocyanatgehalt von >96 Gew.-% und besonders bevorzugt 4,4'-Diphenylmethandiisocyanat eingesetzt.

In einer weiteren bevorzugten Ausführungsform des thermoplastisch verarbeitbaren Polyurethans wird als Komponente (B) ein Diphenylmethandiisocyanat-Isomerengemisch mit einem 4,4'-Diphenylmethandiisocyanatgehalt von größer 96 Gew.-% bezogen auf das Gesamtgewicht der Komponente (B) eingesetzt, vorzugsweise wird als Komponente (B) 4,4'-Diphenylmethandiisocyanat eingesetzt.

In einer weiteren bevorzugten Ausführungsform des thermoplastisch verarbeitbaren Polyurethans wird als Komponente (B) 1,6-Hexamethylendiisocyanat eingesetzt.

Als Komponente (C) (Kettenverlängerer) eignen sich alle dem Fachmann bekannten linearen Diolen mit einem Molekulargewicht von 62 g/mol bis 500 g/mol. Die Diole und / oder deren Vorläuferverbindungen können aus fossilen oder biologischen Quellen gewonnen worden sein. Geeignete Diole sind vorzugsweise aliphatische Diole mit 2 bis 14 Kohlenstoffatomen, wie z.B. Ethandiol, 1,4-Butandiol, 1,6-Hexandiol, 1,8-Octandiol, 1,10-Decandiol, 1,12-Dodecandiol, Diethylenglykol und Dipropylenglykol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di-(hydroxyethyl)-hydrochinon und ethoxylierte Bisphenole. Besonders bevorzugt werden als kurzkettige Diole Ethandiol, 1,4-Butandiol, 1,6-Hexandiol und 1,4-Di-(hydroxyethyl)-hydrochinon eingesetzt. Es können auch Gemische der vorgenannten Kettenverlängerer eingesetzt werden. Daneben können auch kleine Mengen an Diaminen und / oder an Triolen zugesetzt werden.

In einer weiteren bevorzugten Ausführungsform des thermoplastisch verarbeitbaren Polyurethans werden als Komponente (C) 1,2-Ethandiol, 1,4-Butandiol, 1,6-Hexandiol, 1,4-Di-(hydroxyethyl)-hydrochinon, 1,3-Cyclobutandiol und / oder Mischungen aus mindestens 2 hieraus eingesetzt, vorzugsweise werden 1,2-Ethandiol, 1,4-Butandiol, 1,6-Hexandiol und / oder Mischungen aus mindestens 2 hieraus, besonders bevorzugt 1,2-Ethandiol, 1,4-Butandiol und / oder Mischungen hieraus eingesetzt.

In einer weiteren bevorzugten Ausführungsform des thermoplastisch verarbeitbaren Polyurethans werden als Komponente (C) ein oder mehrere Diole eingesetzt, ausgewählt aus der Gruppe bestehend aus 1,2-Ethandiol, 1,4-Butandiol, 1,6-Hexandiol, 1,4-Di-(beta-Hydroxyethyl)hydrochinon oder einen Gemisch aus mindestens zwei von diesen eingesetzt, vorzugsweise werden als Komponente (C) 1,2-Ethandiol, 1,4-Butandiol oder Mischungen hieraus eingesetzt und besonders bevorzugt wird als Komponente (C) 1,2-Ethandiol eingesetzt.

Als Katalysatoren (D) können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titansäureester, Eisenverbindungen, Wismutverbindungen, Zirkonverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt sind Dibutylzinndilaurat, Zinndioctoat und Titansäureester.

Als Additive, Hilfs- und Zusatzstoffe (E) können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Als monofunktionelle Kettenabbrecher (F) können Monoalkohole wie z. B. 1-Butanol, 1-Hexanol, 1-Oktanol und Stearylalkohol oder Monoamine, wie z. b. 1-Butylamin, Di-n-butylamin und Stearylamin eingesetzt werden, um ein bestimmtes TPU-Molekulargewicht einzustellen.

In einer weiteren bevorzugten Ausführungsform des thermoplastisch verarbeitbaren Polyurethans weist das thermoplastisch verarbeitbares Polyurethanpolymer eine Härte im Bereich von 35 Shore A bis 60 Shore A, vorzugsweise im Bereich von 40 Shore A bis 60 Shore A, besonders bevorzugt im Bereich von 40 Shore A bis 55 Shore A auf, jeweils bestimmt nach DIN ISO 7619-1 (2012-02-01).

In einer weiteren bevorzugten Ausführungsform des thermoplastisch verarbeitbaren Polyurethans weist das thermoplastisch verarbeitbares Polyurethanpolymer im Bereich von 0 °C bis 20 °C ein tanD von $\geq$ 0,20 auf, wobei tanD gemäß DIN EN ISO 6721-1:2011 bestimmt wurde. Vorzugsweise weist das thermoplastisch verarbeitbares Polyurethanpolymer bei 0 °C ein tanD im Bereich von 0,20 bis 0,40, besonders bevorzugt im Bereich von 0,30 bis 0,40 aufweist, wobei tanD gemäß DIN EN ISO 6721-1:2011 bestimmt wurde. Vorzugsweise weist das thermoplastisch verarbeitbares Polyurethanpolymer bei 20 °C ein tanD im Bereich von 0,20 bis 0,26, besonders bevorzugt im Bereich von 0,21 bis 0,25 aufweist, wobei tanD gemäß DIN EN ISO 6721-1:2011 bestimmt wurde.

Besonders bevorzugt werden die thermoplastisch verarbeitbaren Polyurethane mit einer Härte von Shore A 40 bis Shore A 60 aus folgenden Hauptkomponenten hergestellt:

Komponente (A):

i) 1,4-Butandiol-polyadipate, 1,6-Hexandiol-polyadipate, Ethandiol-1,4-butandiol-polyadipate, 1,6-Hexandiol-neopentylglykol-polyadipate, 1,6-Hexandiol-1,4-butandiol-polyadipate und deren Mischungen mit Molekulargewichten Mn im Bereich von 500 bis 5000 g/mol, wobei Mn aus der OH-Zahl errechnet wurde, die gemäß DIN53240 bestimmt wurde, oder

ii) Polypropylenoxide oder Polyethylen-/Polypropylenoxide und/oder Polymerisate des Tetrahydrofurans und deren Mischungen mit Molekulargewichten Mn im Bereich von 500 bis 5000 g/mol, wobei Mn aus der OH-Zahl errechnet wurde, die gemäß DIN53240 bestimmt wurde,

Komponente (B):
iii) 4,4'-Diphenylmethandiisocyanat, 4,4'-Dicyclohexylmethandiisocyanat und/oder 1,6-Hexamethylendiisocyanat

Komponente (C):

iv) Ethandiol, 1,4-Butandiol, 1,6-Hexandiol und/oder 1,4-Di-(hydroxyethyl)-hydrochinon.,

wobei auch Mischungen der Komponenten innerhalb i) bis iv) und auch zwischen i) und ii) eingesetzt werden können.

Das thermoplastisch verarbeitbare Polyurethanpolymer kann diskontinuierlich oder kontinuierlich hergestellt werden. Die bekanntesten technischen Herstellverfahren zur Herstellung von TPU sind das Bandverfahren (GB-A 1 057018) und das Extruderverfahren (DE-A 1 964 834, DE-A2 059570 und US-A 5 795 948).

Zur Herstellung des thermoplastisch verarbeitbaren Polyurethanpolymers eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

Das thermoplastisch verarbeitbare Polyurethanpolymer kann z.B. auf einem Zweiwellenextruder dadurch hergestellt werden, dass man das Prepolymer im ersten Teil des Extruders herstellt und die Kettenverlängerung und Polyisocyanatzugabe im zweiten Teil anschließt. Erfindungsgemäß muss die Dosierung des Kettenverlängerers (Komponente (C)) vor der Dosierung des weiteren Polyisocyanates erfolgen. Die Zugabe des Kettenverlängerers und Polyisocyanates darf nicht parallel in die gleiche Dosieröffnung des Extruders erfolgen.

Das NCO- und OH-Prepolymer können aber auch außerhalb des Extruders in einem separaten, vorgeschalteten Prepolymerreaktor, diskontinuierlich in einem Kessel oder kontinuierlich in einem Rohr mit Statikmischern oder einem gerührten Rohr (Rohrmischer) hergestellt werden.

Ein in einem separaten Prepolymerreaktor hergestelltes OH-Prepolymer kann aber auch mittels eines ersten Mischapparates, z.B eines Statikmischers, mit dem Diisocyanat und mittels eines zweiten Mischapparates, z. B. eines Mischkopfes, mit dem Restmengen Polyisocyanaten vermischt werden. Anschließend wird dieses Reaktionsgemisch analog dem bekannten Bandverfahren kontinuierlich auf einen Träger, bevorzugt ein Förderband, aufgebracht, wo man es bis zur Erstarrung des Materials ggf. unter Beheizung des Bandes zum TPU reagieren lässt.

In einer bevorzugten Ausführungsfonn wird das Verfahren bei einer Reaktionstemperatur im Bereich von 140 °C bis 240 °C durchgeführt. In einer weiteren bevorzugten Ausfuhrungsform wird das Verfahren in einem Extruder bei einer Reaktionstemperatur im Bereich von 140 °C bis 240 °C durchgeführt.

Eine weichmacherfreie Zusammensetzung enthält mindestens ein zuvor beschriebenes thermoplastisch verarbeitbares Polyurethanpolymer und ein Additiv.

Aufgrund der guten mechanischen Eigenschaften, der guten Hydrolysestabilität und der guten Alterungsbeständigkeit, eignen sich die zuvor beschriebenen thermoplastisch verarbeitbaren Polyurethanpolymere oder eine solche thermoplastisch verarbeitbare Polyurethanpolymere enthaltende weichmacherfreie Zusammensetzung sehr gut für Anwendungen bei denen der Werkstoff einer mechanischen Belastung ausgesetzt ist, oder ein hohe mechanische Dämpfung (tan D) benötigt wird, eine gute Materialbeständigkeit (bspw. gute Abriebsbeständigkeit) sowie eine gute Haftung zu anderen Werkstoffen insbesondere Polymeren erforderlich ist, wie dies beispielsweise bei Dichtungen, Vibrationsdämpfern, Schwingungsisolatoren, Verbindungsisolatoren, Handgriffen, Garnen und / oder Vliesstoffen der Fall ist.

Ein Gegenstand der Erfindung ist daher die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Dichtungen.

In einer bevorzugten Ausführungsform sind die Dichtungen direkt angespritzte Gehäusedichtungen von Elektro- und Elektronikgeräten und / oder extrudierte Dichtungsprofile.

Ein weiterer Gegenstand der Erfindung ist eine Dichtung umfassend oder enthaltend mindestens ein zuvor beschriebenes thermoplastisch verarbeitbares Polyurethanpolymer mit einer Härte von ≤ 60 Shore A.

In einer bevorzugten Ausfuhrungsform ist die Dichtung eine direkt angespritzte Gehäusedichtung von Elektro- und Elektronikgeräten und / oder eine extrudiertes Dichtungsprofil.

Ein weiterer Gegenstand der Erfindung ist die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Vibrationsdämpfer, Schwingungsisolatoren und / oder Verbindungsisolatoren.

In einer bevorzugten Ausfuhrungsform sind die Vibrationsdämpfer, Schwingungsisolatoren und / oder Verbindungsisolatoren Standfüße für Elektro- und Elektronikgeräte, Maschinenfüße, Ecken- und / oder Kantenschutz, Dämpfer für die Saiten von Tennis- und / oder Squashschlägern, Weichkomponente für Schutzhüllen von Mobiltelefonen und / oder Standfüße von Koffern, Sporttaschen oder Freizeittaschen.

Ein weiterer Gegenstand der Erfindung ist ein Vibrationsdämpfer, ein Schwingungsisolator und / oder ein Verbindungsisolator umfassend oder enthaltend mindestens ein zuvor beschriebenes thermoplastisch verarbeitbares Polyurethanpolymer mit einer Härte von ≤ 60 Shore A.

In einer bevorzugten Ausführungsform ist der Vibrationsdämpfer, der Schwingungsisolator und / oder der Verbindungsisolator ein Standfuß für Elektro- und Elektronikgeräte, ein Maschinenfuß, ein Ecken- und / oder Kantenschutz, ein Dämpfer für die Saiten von Tennis- und / oder Squashschlägern, eine Weichkomponente für Schutzhüllen von Mobiltelefonen und / oder ein Standfuß von Koffern, Sporttaschen oder Freizeittaschen.

Ein weiterer Gegenstand der Erfindung ist die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Handgriffen.

Ein weiterer Gegenstand der Erfindung ist die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Handgriffen, wobei das zuvor beschriebene thermoplastisch verarbeitbare Polyurethanpolymer mit einer Härte von ≤ 60 Shore A oder die zuvor beschriebene weichmacherfreie Zusammensetzung nicht zur Herstellung von Kunstleder für Handgriffe verwendet wird.

In einer bevorzugten Ausführungsform sind die Handgriffe Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten.

Ein weiterer Gegenstand der Erfindung ist ein Handgriff umfassend oder enthaltend mindestens ein zuvor beschriebenes thermoplastisch verarbeitbares Polyurethanpolymer mit einer Härte von ≤ 60 Shore A.

Ein weiterer Gegenstand der Erfindung ist ein Handgriff umfassend oder enthaltend mindestens ein zuvor beschriebenes thermoplastisch verarbeitbares Polyurethanpolymer mit einer Härte von ≤ 60 Shore A oder eine zuvor beschriebene weichmacherfreie Zusammensetzung, wobei der Handgriff kein Kunstleder enthält, umfassend oder enthaltend mindestens ein zuvor beschriebenes thermoplastisch verarbeitbares Polyurethanpolymer mit einer Härte von ≤ 60 Shore A oder eine zuvor beschriebene weichmacherfreie Zusammensetzung.

In einer bevorzugten Ausführungsform ist der Handgriff ein Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten.

Ein weiterer Gegenstand der Erfindung ist die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Garn und / oder Vliesstoffen.

In einer bevorzugten Ausführungsform ist das Garn und / oder der Vliesstoff Bestandteil von einem Oberschuh, von Bekleidung und / oder von Kunstleder, insbesondere Kunstleder für Möbel oder Automobilinnenanwendungen.

Ein weiterer Gegenstand der Erfindung ist die Verwendung eines zuvor beschriebenen thermoplastisch verarbeitbaren Polyurethanpolymers mit einer Härte von ≤ 60 Shore A oder einer zuvor beschriebenen weichmacherfreien Zusammensetzung zur Herstellung von Garn und / oder Vliesstoffen, wobei das Garn und / oder die Vliesstoffe kein Kunstleder sind.

In einer bevorzugten Ausführungsform ist das Garn und / oder der Vliesstoff Bestandteil von einem Oberschuh und / oder von Bekleidung, wobei das Garn und / oder die Vliesstoffe kein Kunstleder sind.

Ein weiterer Gegenstand der Erfindung ist ein Garn und / oder ein Vliesstoffe umfassend oder enthaltend mindestens ein zuvor beschriebenes thermoplastisch verarbeitbares Polyurethanpolymer mit einer Härte von ≤ 60 Shore A.

In einer bevorzugten Ausführungsform ist das Garn und / oder der Vliesstoff Bestandteile von einem Oberschuh, von Bekleidung und / oder von Kunstleder für Möbel oder Automobilinnenanwendungen.

Ein weiterer Gegenstand der Erfindung ist ein Garn und / oder ein Vliesstoffe umfassend oder enthaltend mindestens ein zuvor beschriebenes thermoplastisch verarbeitbares Polyurethanpolymer mit einer Härte von ≤ 60 Shore A, wobei das Garn und / oder die Vliesstoffe kein Kunstleder sind.

In einer bevorzugten Ausführungsform ist die das Garn und / oder der Vliesstoff Bestandteile von einem Oberschuh und / oder von Bekleidung, wobei das Garn und / oder die Vliesstoffe kein Kunstleder sind.

Die Erfindung soll anhand der nachfolgenden Beispiele näher erläutert werden, ohne darauf beschränkt zu sein.

**Messmethoden:**

Zugversuch:

Messungen im Zugversuch nach ISO 53504 (2009-10) mit einer Zuggeschwindigkeit von 200 mm/min.

Shore Härte:

Die Messung der Shore Härte erfolgte nach DIN ISO 7619-1 (2012-02-01).

Verfestigungsgeschwindigkeit (Härte bei 0s / 60s):

Zur Ermittlung der Verfestigungsgeschwindigkeit wurde die Härteentwicklung von runden Formkörpern (Durchmesser 30 mm, Höhe 6 mm) nach der Spritzgießverarbeitung (Einstellung der Spritzgießmaschine: 25 s Kühlzeit und 25 s Nachdruckzeit) gemessen. Dabei wurde die Härte der Prüfkörper nach DIN 7619-1 (2012-02-01) sofort nach der Entnahme aus der Form (0 s) und nach 60 s gemessen.

Abriebwiderstand :

Bestimmung des Abriebwiderstandes erfolgte nach ISO 4649:2014-03.

Druckverformungsrest:

Bestimmung des Druckverformungsrestes erfolgt nach DIN ISO 815-1 09/2010

Alterungstest:

Die nach_ISO 53504 (2009-10) hegestellten Stäbchen wurden jeweils in einem Klimaschrank bei 80°C bzw 110°C mit 95% Luftfeuchtigkeit gelagert. Nach 28 Tage und 49 Tage wurde die Zugfestigkeit gemessen und die erhaltenden Werte für die Zugfestigkeit verglichen (Zugfestigkeit mit Lagerung (Alterung) vs. Zugfestigkeit ohne Lagerung (Alterung).

Lösungsviskosität:

Die TPU Probe wird unter Rühren bei Raumtemperatur in einer 0,4%igen Lösung aus N-Methylpyrrolidon +0,1% Dibutylamin gelöst. Gleichzeitig wird auch eine sogenannte Blindprobe, bestehend aus N-Methylpyrrolidon und 0,1% Dibutylamin Lösung, aber ohne das TPU vorbreitet. Die Lösungen werden über Nacht stehen gelassen und am nächsten Tag gemessen. Die Lösungen werden nochmal kurz aufgerührt und anschließend bei 25°C mit dem Stabinger-Viskosimeter SVM3000/G2 gemessen. Gemessen wird die kinematische Viskosität des Blindwertes und der Lösungen.

**Verwendete Rohstoffe:**

Polyol 1 = Acclaim®2200N (Handelsprodukt von Covestro Deutschland AG, Polypropylendiolether, Molekulargewicht ca. 2000g/mol).

BDO = 1,4-Butandiol (BDO, Reinheit ≥ 99 Gew.-%) wurde von der Firma Ashland bezogen.

MEG = 1,2-Ethandiol (MEG, Reinheit ≥ 99 Gew.-%) wurde von der Firma OQEMA AG bezogen.

MDI = 4,4'-Diphenylmethandiisocyanat (MDI, Reinheit ≥ 99 Gew.-%) wurde von der Covestro AG bezogen.

Irganox® 1010 wurde von der Firma BASF SE (DE) bezogen.

2-Butanon (Reinheit ≥99,5%) wurde von der Firma Merck KGaA (DE) bezogen.

Tyzor® AA105 wurde von der Firma Dorf Ketal (US) bezogen.

Polyether LP 112 wurde von der Covestro AG bezogen (Polypropylendiolether, Molekulargewicht Mn ca. 1000 g/mol).

**Beispiele**

In der Tabelle 1 wird die Erfindung anhand einiger Beispiele verdeutlicht. Die verwendeten Herstellverfahren sind nachstehend beschrieben.

Verfahren 1*: Weichsegment-Vorverlängerung (gemäß der EP-A 1338614), nicht erfindungsgemäß

Stufe 1: Die Teilmenge 1 des MDI's wird bei ca.140°C mit 1mol Polyol oder Polyolgemisch unter Rühren zum Umsatz > 90 mol-%, bezogen auf das Polyol, gebracht.
Stufe 2: Dem gerührten Reaktionsgemisch wird die Teilmenge 2 des MDI und anschließend der Kettenverlängerer zugegeben, nach intensiver Durchmischung (ca. 20 s) wird das Reaktionsgemisch auf ein Blech gegossen und anschließend 30 Minuten bei 120°C getempert.

Verfahren 2: Erfindungsgemäß geeignetes Mehrstufen-Vorverlängerungsverfahren MDI

Stufe 1: Die Teilmenge 1 des MDI's wird bei ca.140°C mit 1 mol Polyol oder Polyolgemisch unter Rühren zum Umsatz > 90 mol-%, bezogen auf das Polyol, gebracht.
Stufe 2: Dem gerührten Reaktionsgemisch wird der Kettenverlängerer zugegeben und ca. 10 s intensiv gerührt.
Stufe 3: Die Teilmenge 2 des MDI's wird der gerührten Reaktionsmischung zugegeben. Das Reaktionsgemisch wird weitere 20 s gerührt, anschließend auf ein Blech gegossen und 30 Minuten bei 120°C getempert.
Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm$^3$/s zu Stäben (Formtemperatur: 40°C; Stabgröße: 80x10x4mm) bzw. Platten (Formtemperatur: 40°C; Größe: 125x50x2 mm) verarbeitet.

Von den hergestellten TPU Produkten wurden die mechanischen Werte (100% Modul, 300%-Modul, Reißfestigkeit, Reißdehnung und Shore A/D Härte), die Verfestigungsgeschwindigkeit, der Abriebwiderstand und der Druckverformungsrest bestimmt sowie die Alterungsbeständigkeit ermittelt.

Tabelle 1: Vergleichsbeispiele 1 und 4, Beispiele 2, 3, 5, 6 und 7: Messergebnisse von weichen TPUs

| Versuchsnummer | Verfahren | Polyol | Kettenverlängerer | MDI / Teilmenge 1 [mol] | MDI / Teilmenge 2 [mol] | Theoretische Härte[#] | Härte [Shore] | 100% Modul [MPa] | Zugfestigkeit [MPa] | Härte bei 0s/ 60s [Shore A] |
|---|---|---|---|---|---|---|---|---|---|---|
| 1* | 1 | 1 | MEG | 1,5 | 0,539 | 12 | 42A | 2,4 | 15,3 | 19/25 |
| 2 | 2 | 1 | MEG | 1,5 | 0,539 | 12 | 47A | 1,5 | 15,1 | 26/33 |
| 3 | 2 | 1 | MEG | 1,5 | 1,642 | 22.4 | 60A | 4,3 | 14,4 | 39/43 |
| 4* | 1 | 1 | MEG | 1,3 | 0,739 | 12 | 40A | 1,1 | 9,8 | 11/18 |
| 5 | 2 | 1 | MEG | 1,3 | 0,739 | 12 | 49A | 1,9 | 11,8 | 30/34 |
| 6 | 2 | 1 | MEG | 2 | 0.373 | 16 | 55A | 2,1 | 12 | 35/48 |
| 7 | 2 | 1 | BDO | 2 | 0.255 | 16 | 59A | 1,6 | 14,9 | 20/45 |

* Nicht erfindungsgemäßes Vergleichsbeispiel, [#] Die theoretische Härte ist der Anteil der Hartsegmente des TPUs:

z. B. TH = n(BDO+MDI)/(n(BDO+MDI)+m(Polyol+MDI))

Tabelle 2: Vergleichsbeispiel 1 und erfindungsgemäße Beispiele 2,3 und 6: Messergebnisse von der Bestimmung des Abriebwiderstands, der Bestimmung des Druckverformungsrests und des Alterungstests.

| Versuchsnummer | Abriebwiderstand [mm$^3$] | Druckverformungsrest | | | Zugfestigkeit [MPa] | Alterungstest bei 80°C Zugfestigkeit [MPa] | Alterungstest 110°C Zugfestigkeit [MPa] |
|---|---|---|---|---|---|---|---|
| | | Methode A 24h/70°C | Methode C 24h/70°C | 72h/23°C | 0 Tage | 28 Tage | 28 Tage |
| 1* | 224 | 30 | 24 | 14 | | | |
| 2 | 96 | 21,4 | 16,7 | 8,9 | | | |
| 3 | 38 | 22 | | 12 | 14,4 | 11,1 | 10,1 |
| 6 | 46 | 33 | | 14 | 12 | 11,6 | 7,2 |
| * Nicht erfindungsgemäßes Vergleichsbeispiel | | | | | | | |

In den angeführten Beispielen der Tabelle 1 (Versuche 1, 2, 4 und 5), welche aus gleichen Rohstoffen und gleicher theoretischer Härte nach unterschiedlichen Verfahren hergestellt wurden, ist deutlich zu erkennen, dass die TPU-Materialien, die durch das erfindungsgemäß geeignete Mehrstufenverfahren (Verfahren 2) hergestellt wurden, deutlich schneller verfestigen, das heißt, die gemessene Härte nach 0 Sekunden und auch nach 60 Sekunden der Entnahme aus der Spritzgießmaschine ist höher als bei den jeweiligen Vergleichsversuchen. Bei den Versuchen 6 und 7 ist deutlich zu erkennen, dass die auf Monoethylenglykol (MEG) basierten TPU schneller in der Verfestigung sind als solche, die auf 1,4-Butandiol (BDO) basieren.

Die in Tabelle 2 aufgeführten Beispiele entsprechen den jeweiligen Beispielen aus Tabelle 1. Es ist deutlich zu erkennen, dass der Abriebwiderstand der erfindungsgemäßen Beispiele 2, 3 und 6 signifikant geringer ist als beim Vergleichsbeispiel 1. Auch zeigen die erfindungsgemäßen Beispiele deutlich bessere Werte bei der Bestimmung des Druckverformungsrests. Aus den erfindungsgemäßen Beispielen 3 und 6 lässt sich entnehmen, dass die erfindungsgemäßen Polyurethane eine gute Alterungsbeständigkeit aufweisen.

Vergleichsbeispiel mit Zusatz von Lösungsmittel und erfindungsgemäß geeignetes TPU ergebendes Beispiel ohne Zusatz von Lösungsmittel

Bei den Vergleichsbeispiel 8 wurde als Polyol Acclaim® Polyether 2200N (Polyol 1) eingesetzt und gemäß der Versuchsbeschreibung der US3915923 gearbeitet. Die resultierenden Produkte wurden dann mit einem erfindungsgemäßen Beispiel 6, welches nach dem erfindungsgemäßen Verfahren 2 hergestellt wurde, verglichen. Dazu wurden jeweils gleiche theoretische Härten eingestellt.

Versuch 8:

260 g Acclaim® 2200N (OH Zahl 56,1, entsprechend 1 mol) und 1,3 g Irganox® 1010 werden in 650,03 g 2-Butanon bei 56 °C unter Stickstoff gelöst. Dann werden 64,79 g (2 mol) MDI langsam zudosiert. Danach folgt die Zugabe von 0,69 g Tyzor AA105 (0,5%ige Lösung in Polyether LP 112, entsprechend 10 ppm). Die Reaktionsmischung wird etwa 30 min lang gerührt und die Temperatur sollte bei 60 °C gehalten werden. Danach werden 11,05 g (1,373 mol) Monoethylenglykol (MEG) langsam zu der Reaktionsmischung getropft und es wird für weitere 30-60 min bei 60 °C gerührt. Zum Schluss werden 12,13 g (0,373 mol) MDI bei 60 °C zudosiert und es wird weiter bei 60 °C gerührt, bis sich der NCO-Gehalt nicht mehr ändert und damit von einem vollständigen Umsatz auszugehen ist. Danach wird das Lösungsmittel 2-Butanon durch Vakuumdestillation möglichst entfernt.

Tabelle 3: Ergebnisse Vergleichsbeispiel 8 versus erfindungsgemäß geeignetes TPU ergebendes Beispiel 6

| Versuchsnummer | Verfahren | Polyol | Ketten-Verlängerer | MDI Teilmenge 1 [mol] | MDI Teilmenge 2 [mol] | Theoretische Härte | Lösungsviscosität | Zugfestigkeit [MPa] |
|---|---|---|---|---|---|---|---|---|
| 8 | Nach US 3915923 | 1 | MEG | 2 | 0,373 | 16 | 1,054 | Verarbeitung nicht möglich |
| 6 | 2 | 1 | MEG | 2 | 0,373 | 16 | 1,333 | 12 |

Der Versuch 8 wurde nach dem Verfahren der US 3915923 hergestellt. Nach der Zugabe der Kettenverlängerer musste 3 Stunden lang gerührt werden, um den vollständigen Umsatz zu erhalten bzw. bis zu einem konstanten NCO-Gehalt. Nach Abdestillieren des Lösungsmittels war die Reaktionsmischung trotzdem bei Raumtemperatur noch hochviskos und nicht fest. Die Reaktionszeit verglichen mit der Reaktionszeit des erfindungsgemäß geeignetes TPU ergebenden Verfahrens (maximal 3. Min), war sehr lang. Das nichterfindungsgemäße Produkt konnte aufgrund der sehr niedrigen Lösungsviskosität, die einem geringen Molekulargewicht entspricht, und der Plastizität bei Raumtemperatur für weitere mechanische Messungen nicht thermoplastisch in einer Spritzgießmaschine verarbeitet werden und ist für praktische Anwendungen nicht verwendbar, insbesondere für die beanspruchten Verwendungen. Das erfindungsgemäß geeignete Polyurethanpolymere 6 ließ sich gut verarbeiten und ist für vielfältige Anwendungen geeignet, insbesondere für die beanspruchten Verwendungen und Gegenstände. Das erfindungsgemäß geeignete Polyurethanpolymer 6 weist eine Shorehärte von 55A auf bestimmt gemäß DIN ISO 7619-1 (2012-02-01).

**Patentansprüche**

1. Verwendung eines thermoplastisch verarbeitbaren Polyurethanpolymers mit einer Härte von ≤ 60 Shore A bestimmt gemäß DIN ISO 7619-1 (2012-02-01) oder einer weichmacherfreien Zusammensetzung enthaltend mindestens ein thermoplastisch verarbeitbares Polyurethanpolymer mit einer Härte von ≤ 60 Shore A bestimmt gemäß DIN ISO 7619-1 (2012-02-01) zur Herstellung von

   a) Dichtungen,
   b) Vibrationsdämpfer, Schwingungsisolatoren und / oder Verbindungsisolatoren,
   c) Handgriffen, und
   d) Garn und / oder Vliesstoffen,
   wobei das thermoplastisch verarbeitbare Polyurethanpolymer mit einer Härte von ≤ 60 Shore A erhältlich oder erhalten durch Umsetzen der folgenden Komponenten

   (A) einem oder mehreren im Wesentlichen linearen Polyetherpolyolen und / oder Polyesterpolyolen, wobei die Gesamtmenge der Komponente (A) ein mittleres Molekulargewicht Mn im Bereich von 500 g/mol bis 5000 g/mol aufweist, wobei Mn aus der OH-Zahl errechnet wurde, die gemäß DIN53240 bestimmt wurde und wobei "im Wesentlichen" bedeutet, dass mindestens 95 Mol-% der Gesamtstoffmenge der Polyole der Komponente A) aus linearen Polyolen bestehen,
   (B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,
   (C) einem oder mehreren linearen Diolen mit einem Molekulargewicht von 62 g/mol bis 500 g/mol,
   (D) gegebenenfalls in Gegenwart von einem oder mehreren Katalysatoren,
   (E) gegebenenfalls in Gegenwart von einem oder mehreren Additiven, Hilfs- und / oder Zusatzstoffen, und
   (F) gegebenenfalls in Gegenwart von einem oder mehreren monofunktionellen Kettenabbrechern,

   **dadurch gekennzeichnet, dass** die Umsetzung lösungsmittelfrei erfolgt und die folgenden Schritte umfasst oder daraus besteht:

   1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
   2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
   3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt,

wobei lösungsmittelfrei bedeutet, dass der Anteil an Lösungsmittel höchstens 1 Gew.-% bezogen auf das Gesamtgewicht der Reaktionsmischung beträgt und unter einem "Lösungsmittel" eine Substanz verstanden wird, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert.

2. Verwendung nach Anspruch 1, **dadurch gekennzeichnet, dass** die Dichtungen direkt angespritzte Gehäusedichtungen von Elektro- und Elektronikgeräten und / oder extrudierte Dichtungsprofile sind.

3. Verwendung nach Anspruch 1, **dadurch gekennzeichnet, dass** die Vibrationsdämpfer, Schwingungsisolatoren und / oder Verbindungsisolatoren Standfüße für Elektro- und Elektronikgeräte, Maschinenfüße, Ecken- und / oder Kantenschutz, Dämpfer für die Saiten von Tennis- und / oder Squashschlägern, Weichkomponente für Schutzhüllen von Mobiltelefonen und / oder Standfüße von Koffern, Sporttaschen oder Freizeittaschen sind.

4. Verwendung nach Anspruch 1, **dadurch gekennzeichnet, dass** die Handgriffe Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten sind.

5. Verwendung nach Anspruch 1, **dadurch gekennzeichnet, dass** das Garn und / oder der Vliesstoff Bestandteil von einem Oberschuh, von Bekleidung, von Kunstleder, insbesondere Kunstleder für Möbel oder Automobilinnenanwendungen ist.

6. Dichtung umfassend oder enthaltend mindestens ein thermoplastisch verarbeitbares Polyurethanpolymer mit einer Härte von $\leq$ 60 Shore A bestimmt gemäß DIN ISO 7619-1 (2012-02-01), wobei das thermoplastisch verarbeitbare Polyurethanpolymer mit einer Härte von $\leq$ 60 Shore A erhältlich oder erhalten durch Umsetzen der folgenden Komponenten

(A) einem oder mehreren im Wesentlichen linearen Polyetherpolyolen und / oder Polyesterpolyolen, wobei die Gesamtmenge der Komponente (A) ein mittleres Molekulargewicht Mn im Bereich von 500 g/mol bis 5000 g/mol aufweist, wobei Mn aus der OH-Zahl errechnet wurde, die gemäß DIN53240 bestimmt wurde und wobei "im Wesentlichen" bedeutet, dass mindestens 95 Mol-% der Gesamtstoffmenge der Polyole der Komponente A) aus linearen Polyolen bestehen,
(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** die Umsetzung lösungsmittelfrei erfolgt und die folgenden Schritte umfasst oder daraus besteht:

1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt,

wobei lösungsmittelfrei bedeutet, dass der Anteil an Lösungsmittel höchstens 1 Gew.-% bezogen auf das Gesamtgewicht der Reaktionsmischung beträgt und unter einem "Lösungsmittel" eine Substanz verstanden wird, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert.

**7.** Dichtung nach Anspruch 6, **dadurch gekennzeichnet, dass** die Dichtung eine direkt angespritzte Gehäusedichtung von Elektro- und Elektronikgeräten und / oder eine extrudiertes Dichtungsprofil ist.

**8.** Vibrationsdämpfer, Schwingungsisolator und / oder Verbindungsisolator umfassend oder enthaltend mindestens ein thermoplastisch verarbeitbares Polyurethanpolymer mit einer Härte von ≤ 60 Shore A bestimmt gemäß DIN ISO 7619-1 (2012-02-01), wobei das thermoplastisch verarbeitbare Polyurethanpolymer mit einer Härte von ≤ 60 Shore A erhältlich oder erhalten durch Umsetzen der folgenden Komponenten

(A) einem oder mehreren im Wesentlichen linearen Polyetherpolyolen und / oder Polyesterpolyolen, wobei die Gesamtmenge der Komponente (A) ein mittleres Molekulargewicht Mn im Bereich von 500 g/mol bis 5000 g/mol aufweist, wobei Mn aus der OH-Zahl errechnet wurde, die gemäß DIN53240 bestimmt wurde und wobei "im Wesentlichen" bedeutet, dass mindestens 95 Mol-% der Gesamtstoffmenge der Polyole der Komponente A) aus linearen Polyolen bestehen,
(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** die Umsetzung lösungsmittelfrei erfolgt und die folgenden Schritte umfasst oder daraus besteht:

1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt,

wobei lösungsmittelfrei bedeutet, dass der Anteil an Lösungsmittel höchstens 1 Gew.-% bezogen auf das Gesamtgewicht der Reaktionsmischung beträgt und unter einem "Lösungsmittel" eine Substanz verstanden wird, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert.

**9.** Vibrationsdämpfer, Schwingungsisolator und / oder Verbindungsisolator nach Anspruch 8, **dadurch gekennzeichnet, dass** der Vibrationsdämpfer, der Schwingungsisolator und / oder der Verbindungsisolator ein Standfuß für Elektro- und Elektronikgeräte, ein Maschinenfuß, ein Ecken- und / oder Kantenschutz, ein Dämpfer für die Saiten von Tennis- und / oder Squashschlägern, eine Weichkomponente für Schutzhüllen von Mobiltelefonen und / oder ein Standfuß von Koffern, Sporttaschen oder Freizeittaschen ist.

**10.** Handgriff umfassend oder enthaltend mindestens ein thermoplastisch verarbeitbares Polyurethanpolymer mit einer Härte von ≤ 60 Shore A bestimmt gemäß DIN ISO 7619-1 (2012-02-01), wobei das thermoplastisch verarbeitbare Polyurethanpolymer mit einer Härte von ≤ 60 Shore A erhältlich oder erhalten durch Umsetzen der folgenden Komponenten

(A) einem oder mehreren im Wesentlichen linearen Polyetherpolyolen und / oder Polyesterpolyolen, wobei die Gesamtmenge der Komponente (A) ein mittleres Molekulargewicht Mn im Bereich von 500 g/mol bis 5000 g/mol aufweist, wobei Mn aus der OH-Zahl errechnet wurde, die gemäß DIN53240 bestimmt wurde und wobei "im Wesentlichen" bedeutet, dass mindestens 95 Mol-% der Gesamtstoffmenge der Polyole der Komponente A) aus linearen Polyolen bestehen,

(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,

(C) einem oder mehreren linearen Diolen mit einem Molekulargewicht von 62 g/mol bis 500 g/mol,

(D) gegebenenfalls in Gegenwart von einem oder mehreren Katalysatoren,

(E) gegebenenfalls in Gegenwart von einem oder mehreren Additiven, Hilfs- und / oder Zusatzstoffen, und

(F) gegebenenfalls in Gegenwart von einem oder mehreren monofunktionellen Kettenabbrechern,

**dadurch gekennzeichnet, dass** die Umsetzung lösungsmittelfrei erfolgt und die folgenden Schritte umfasst oder daraus besteht:

1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,

2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),

3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt,

wobei lösungsmittelfrei bedeutet, dass der Anteil an Lösungsmittel höchstens 1 Gew.-% bezogen auf das Gesamtgewicht der Reaktionsmischung beträgt und unter einem "Lösungsmittel" eine Substanz verstanden wird, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert.

11. Handgriff nach Anspruch 10, **dadurch gekennzeichnet, dass** der Handgriff ein Bestandteil von Handgeräten, Elektrogeräten, Sportgeräten, Elektronikgeräten, Koffern, Sporttaschen, Freizeittaschen, Fahrzeugen, Fahrrädern, Werkzeugen, Behältern und / oder Schreibgeräten ist.

12. Garn und / oder Vliesstoff umfassend oder enthaltend mindestens ein thermoplastisch verarbeitbares Polyurethanpolymer mit einer Härte von ≤ 60 Shore A bestimmt gemäß DIN ISO 7619-1 (2012-02-01), wobei das thermoplastisch verarbeitbare Polyurethanpolymer mit einer Härte von ≤ 60 Shore A erhältlich oder erhalten durch Umsetzen der folgenden Komponenten

(A) einem oder mehreren im Wesentlichen linearen Polyetherpolyolen und / oder Polyesterpolyolen, wobei die Gesamtmenge der Komponente (A) ein mittleres Molekulargewicht Mn im Bereich von 500 g/mol bis 5000 g/mol aufweist, wobei Mn aus der OH-Zahl errechnet wurde, die gemäß DIN53240 bestimmt wurde und wobei "im Wesentlichen" bedeutet, dass mindestens 95 Mol-% der Gesamtstoffmenge der Polyole der Komponente A) aus linearen Polyolen bestehen,

(B) einem oder mehreren Diisocyanaten ausgewählt aus der Gruppe bestehend aus 2-Methyl-1,5-diisocyanatopentan, 1,4-Diisocyanatobutan (BDI), 1,5-Diisocyanatopentan (PDI), 1,6-Diisocyanatohexan (HDI), 2,2,4-Trimethyl-1,6-diisocyanatohexan, 2,4,4-Trimethyl-1,6-diisocyanatohexan oder Diphenylmethandiisocyanat-Isomerengemische mit einem 4,4'-Diphenylmethandiisocyanatgehalt von >96 Gew.-%,

(C) einem oder mehreren linearen Diolen mit einem Molekulargewicht von 62 g/mol bis 500 g/mol,

(D) gegebenenfalls in Gegenwart von einem oder mehreren Katalysatoren,

(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** die Umsetzung lösungsmittelfrei erfolgt und die folgenden Schritte umfasst oder daraus besteht:

1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers aus Verfahrensschritt 2) mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt,

wobei lösungsmittelfrei bedeutet, dass der Anteil an Lösungsmittel höchstens 1 Gew.-% bezogen auf das Gesamtgewicht der Reaktionsmischung beträgt und unter einem "Lösungsmittel" eine Substanz verstanden wird, in der wenigstens eine der Komponenten A, B und C und gegebenenfalls D, E und / oder F gelöst, dispergiert, suspendiert oder emulgiert werden kann, welche aber nicht mit einer der Komponenten A, B und C und gegebenenfalls D, E und / oder F oder mit dem Polymer und dem / den Prepolymer(en) reagiert.

13. Garn und / oder Vliesstoff nach Anspruch 12, **dadurch gekennzeichnet, dass** das Garn und / oder der Vliesstoff Bestandteile von einem Oberschuh, von Bekleidung und / oder von Kunstleder für Möbel oder Automobilinnenanwendungen ist.

14. Verwendung nach einem der Ansprüche 1-5, Dichtung nach einem der Ansprüche 6-7, Vibrationsdämpfer, Schwingungsisolator oder Verbindungsisolator nach einem der Ansprüche 8-9, Handgriff nach einem der Ansprüche 10-11, oder Garn oder Vliesstoff nach einem der Ansprüche 12-13, **dadurch gekennzeichnet, dass** als Komponente (B) 2-Methyl-1,5-diisocyanatopentan, 1,6-Diisocyanatohexan (HDI), 2,2,4-Trimethyl-1,6-diisocyanatohexan, Diphenylmethandiisocyanat-Isomerengemische mit einem 4,4'-Diphenylmethandiisocyanatgehalt von >96 Gew.-% oder Mischungen aus mindestens 2 hieraus eingesetzt werden, vorzugsweise Diphenylmethandiisocyanat-Isomerengemische mit einem 4,4'-Diphenylmethandiisocyanatgehalt von >96 Gew.-% und besonders bevorzugt 4,4'-Diphenylmethandiisocyanat.

15. Verwendung nach einem der Ansprüche 1-5 und 14, Dichtung nach einem der Ansprüche 6-7 und 14, Vibrationsdämpfer, Schwingungsisolator oder Verbindungsisolator nach einem der Ansprüche 8-9 und 14, Handgriff nach einem der Ansprüche 10-11 und 14, oder Garn oder Vliesstoff nach einem der Ansprüche 12-14, **dadurch gekennzeichnet, dass** als Komponente (C) 1,2-Ethandiol, 1,4-Butandiol, 1,6-Hexandiol, 1,4-Di-(hydroxyethyl)-hydrochinon, 1,3-Cyclobutandiol oder Mischungen aus mindestens 2 hieraus eingesetzt werden, vorzugsweise 1,2-Ethandiol, 1,4-Butandiol, 1,6-Hexandiol oder Mischungen aus mindestens 2 hieraus, besonders bevorzugt 1,2-Ethandiol, 1,4-Butandiol oder Mischungen hieraus.

16. Verwendung nach einem der Ansprüche 1-5 und 14-15, Dichtung nach einem der Ansprüche 6-7 und 14-15, 14 16, Vibrationsdämpfer, Schwingungsisolator oder Verbindungsisolator nach einem der Ansprüche 8-9 und 14-15, Handgriff nach einem der Ansprüche 10-11 und 14-15, oder Garn oder Vliesstoff nach einem der Ansprüche 12-15, **dadurch gekennzeichnet, dass** das thermoplastisch verarbeitbares Polyurethanpolymer eine Härte im Bereich von 35 Shore A bis 60 Shore A, vorzugsweise im Bereich von 40 Shore A bis 60 Shore A, besonders bevorzugt im Bereich von 40 Shore A bis 55 Shore A aufweist, jeweils bestimmt nach DIN ISO 7619-1 (2012-02-01).

**Claims**

1. Use of a thermoplastically processible polyurethane polymer having a hardness of $\leq$ 60 Shore A determined in accordance with DIN ISO 7619-1 (2012-02-01) or of a plasticizer-free composition containing at least one thermoplastically processible polyurethane polymer having a hardness of ≤ 60 Shore A determined in accordance with DIN ISO 7619-1 (2012-02-01) for the production of

a) seals,
b) vibration dampers, vibration isolators and/or connection isolators,
c) grips, and
d) yarn and/or nonwovens,

wherein the thermoplastically processible polyurethane polymer having a hardness of ≤ 60 Shore A is obtainable or obtained by reacting the following components

(A) one or more essentially linear polyether polyols and/or polyester polyols, wherein the total amount of component (A) has an average molecular weight Mn in the range from 500 g/mol to 5000 g/mol, where Mn has been calculated from the OH number, which has been determined in accordance with DIN53240, and where "essentially" means that at least 95 mol% of the total molar amount of the polyols of component A) consist of linear polyols,

(B) one or more diisocyanates selected from the group consisting of 2-methyl-1,5-diisocyanatopentane, 1,4-diisocyanatobutane (BDI), 1,5-diisocyanatopentane (PDI), 1,6-diisocyanatohexane (HDI), 2,2,4-trimethyl-1,6-diisocyanatohexane, 2,4,4-trimethyl-1,6-diisocyanatohexane or diphenylmethane diisocyanate isomer mixtures having a diphenylmethane 4,4'-diisocyanate content of > 96% by weight,

(C) one or more linear diols having a molecular weight of 62 g/mol to 500 g/mol,

(D) optionally in the presence of one or more catalysts,

(E) optionally in the presence of one or more additives, auxiliaries and/or additions, and

(F) optionally in the presence of one or more monofunctional chain terminators,

**characterized in that** the reaction is effected in a solvent-free fashion and comprises or consists of the following steps:

1) providing and reacting a mixture made up of the total amount of component (A), a portion of component (B) and optionally a portion or the total amount of component (D), component (E) and/or component (F), to give an NCO-functional prepolymer, where in process step 1) there is a molar ratio of component (B) to component (A) of in the range from 1.1:1.0 to 5.0:1.0,

2) reacting the NCO-functional prepolymer from process step 1) with the total amount of component (C) to obtain an OH-functional prepolymer, optionally in the presence of a further portion of component (D), component (E) and/or component (F),

3) reacting the OH-functional prepolymer from process step 2) with the remaining amount of component (B) and any remaining amount of component (D), component (E) and/or component (F) to obtain the thermoplastically processible polyurethane, where over all process steps there is a molar ratio of component (B) to the sum total of component (A) and component (C) of in the range from 0.9:1.0 to 1.2:1.0,

where solvent-free means that the proportion of solvent is at most 1% by weight, based on the total weight of the reaction mixture, and a "solvent" is understood to mean a substance in which at least one of components A, B and C and, if present, D, E and/or F can be dissolved, dispersed, suspended or emulsified but which does not react with any of components A, B and C and, if present, D, E and/or F or with the polymer and the prepolymer(s).

2. Use according to Claim 1, **characterized in that** the seals are directly injection-moulded-on housing seals of electrical and electronic devices and/or extruded sealing profiles.

3. Use according to Claim 1, **characterized in that** the vibration dampers, vibration isolators and/or connection isolators are feet for electrical and electronic devices, machine feet, corner and/or edge protection, dampers for the strings of tennis and/or squash rackets, soft components for protective cases of mobile telephones and/or feet for suitcases, sports bags or leisure bags.

4. Use according to Claim 1, **characterized in that** the grips are part of hand-held devices, electrical devices, sports equipment, electronic devices, suitcases, sports bags, leisure bags, vehicles, bicycles, tools, containers and/or writing implements.

5. Use according to Claim 1, **characterized in that** the yarn and/or the nonwoven are part of a shoe upper, of clothing, of synthetic leather, especially synthetic leather for furniture or automobile interior applications.

6.  Seal comprising or containing at least one thermoplastically processible polyurethane polymer having a hardness of ≤ 60 Shore A determined in accordance with DIN ISO 7619-1 (2012-02-01), wherein the thermoplastically processible polyurethane polymer having a hardness of ≤ 60 Shore A is obtainable or obtained by reacting the following components

(A) one or more essentially linear polyether polyols and/or polyester polyols, wherein the total amount of component (A) has an average molecular weight Mn in the range from 500 g/mol to 5000 g/mol, where Mn has been calculated from the OH number, which has been determined in accordance with DIN53240, and where "essentially" means that at least 95 mol% of the total molar amount of the polyols of component A) consist of linear polyols,

(B) one or more diisocyanates selected from the group consisting of 2-methyl-1,5-diisocyanatopentane, 1,4-diisocyanatobutane (BDI), 1,5-diisocyanatopentane (PDI), 1,6-diisocyanatohexane (HDI), 2,2,4-trimethyl-1,6-diisocyanatohexane, 2,4,4-trimethyl-1,6-diisocyanatohexane or diphenylmethane diisocyanate isomer mixtures having a diphenylmethane 4,4'-diisocyanate content of > 96% by weight,

(C) one or more linear diols having a molecular weight of 62 g/mol to 500 g/mol,

(D) optionally in the presence of one or more catalysts,

(E) optionally in the presence of one or more additives, auxiliaries and/or additions, and

(F) optionally in the presence of one or more monofunctional chain terminators,

**characterized in that** the reaction is effected in a solvent-free fashion and comprises or consists of the following steps:

1) providing and reacting a mixture made up of the total amount of component (A), a portion of component (B) and optionally a portion or the total amount of component (D), component (E) and/or component (F), to give an NCO-functional prepolymer, where in process step 1) there is a molar ratio of component (B) to component (A) of in the range from 1.1:1.0 to 5.0:1.0,

2) reacting the NCO-functional prepolymer from process step 1) with the total amount of component (C) to obtain an OH-functional prepolymer, optionally in the presence of a further portion of component (D), component (E) and/or component (F),

3) reacting the OH-functional prepolymer from process step 2) with the remaining amount of component (B) and any remaining amount of component (D), component (E) and/or component (F) to obtain the thermoplastically processible polyurethane, where over all process steps there is a molar ratio of component (B) to the sum total of component (A) and component (C) of in the range from 0.9:1.0 to 1.2:1.0,

where solvent-free means that the proportion of solvent is at most 1% by weight, based on the total weight of the reaction mixture, and a "solvent" is understood to mean a substance in which at least one of components A, B and C and, if present, D, E and/or F can be dissolved, dispersed, suspended or emulsified but which does not react with any of components A, B and C and, if present, D, E and/or F or with the polymer and the prepolymer(s).

7.  Seal according to Claim 6, **characterized in that** the seal is a directly injection-moulded-on housing seal of electrical and electronic devices and/or an extruded sealing profile.

8.  Vibration damper, vibration isolator and/or connection isolator comprising or containing at least one thermoplastically processible polyurethane polymer having a hardness of ≤ 60 Shore A determined in accordance with DIN ISO 7619-1 (2012-02-01), wherein the thermoplastically processible polyurethane polymer having a hardness of ≤ 60 Shore A is obtainable or obtained by reacting the following components

(A) one or more essentially linear polyether polyols and/or polyester polyols, wherein the total amount of component (A) has an average molecular weight Mn in the range from 500 g/mol to 5000 g/mol, where Mn has been calculated from the OH number, which has been determined in accordance with DIN53240, and where "essentially" means that at least 95 mol% of the total molar amount of the polyols of component A) consist of linear polyols,

(B) one or more diisocyanates selected from the group consisting of 2-methyl-1,5-diisocyanatopentane, 1,4-diisocyanatobutane (BDI), 1,5-diisocyanatopentane (PDI), 1,6-diisocyanatohexane (HDI), 2,2,4-trimethyl-1,6-diisocyanatohexane, 2,4,4-trimethyl-1,6-diisocyanatohexane or diphenylmethane diisocyanate isomer mixtures having a diphenylmethane 4,4'-diisocyanate content of > 96% by weight,

(C) one or more linear diols having a molecular weight of 62 g/mol to 500 g/mol,

(D) optionally in the presence of one or more catalysts,

(E) optionally in the presence of one or more additives, auxiliaries and/or additions, and

(F) optionally in the presence of one or more monofunctional chain terminators,

**characterized in that** the reaction is effected in a solvent-free fashion and comprises or consists of the following steps:

1) providing and reacting a mixture made up of the total amount of component (A), a portion of component (B) and optionally a portion or the total amount of component (D), component (E) and/or component (F), to give an NCO-functional prepolymer, where in process step 1) there is a molar ratio of component (B) to component (A) of in the range from 1.1:1.0 to 5.0:1.0,

2) reacting the NCO-functional prepolymer from process step 1) with the total amount of component (C) to obtain an OH-functional prepolymer, optionally in the presence of a further portion of component (D), component (E) and/or component (F),

3) reacting the OH-functional prepolymer from process step 2) with the remaining amount of component (B) and any remaining amount of component (D), component (E) and/or component (F) to obtain the thermoplastically processible polyurethane, where over all process steps there is a molar ratio of component (B) to the sum total of component (A) and component (C) of in the range from 0.9:1.0 to 1.2:1.0,

where solvent-free means that the proportion of solvent is at most 1% by weight, based on the total weight of the reaction mixture, and a "solvent" is understood to mean a substance in which at least one of components A, B and C and, if present, D, E and/or F can be dissolved, dispersed, suspended or emulsified but which does not react with any of components A, B and C and, if present, D, E and/or F or with the polymer and the prepolymer(s).

9. Vibration damper, vibration isolator and/or connection isolator according to Claim 8, **characterized in that** the vibration damper, the vibration isolator and/or the connection isolator is a foot for electrical and electronic devices, a machine foot, a corner and/or edge protection, a damper for the strings of tennis and/or squash rackets, a soft component for protective cases of mobile telephones and/or a foot for suitcases, sports bags or leisure bags.

10. Grip comprising or containing at least one thermoplastically processible polyurethane polymer having a hardness of ≤ 60 Shore A determined in accordance with DIN ISO 7619-1 (2012-02-01), wherein the thermoplastically processible polyurethane polymer having a hardness of ≤ 60 Shore A is obtainable or obtained by reacting the following components

(A) one or more essentially linear polyether polyols and/or polyester polyols, wherein the total amount of component (A) has an average molecular weight Mn in the range from 500 g/mol to 5000 g/mol, where Mn has been calculated from the OH number, which has been determined in accordance with DIN53240, and where "essentially" means that at least 95 mol% of the total molar amount of the polyols of component A) consist of linear polyols,

(B) one or more diisocyanates selected from the group consisting of 2-methyl-1,5-diisocyanatopentane, 1,4-diisocyanatobutane (BDI), 1,5-diisocyanatopentane (PDI), 1,6-diisocyanatohexane (HDI), 2,2,4-trimethyl-1,6-diisocyanatohexane, 2,4,4-trimethyl-1,6-diisocyanatohexane or diphenylmethane diisocyanate isomer mixtures having a diphenylmethane 4,4'-diisocyanate content of > 96% by weight,

(C) one or more linear diols having a molecular weight of 62 g/mol to 500 g/mol,

(D) optionally in the presence of one or more catalysts,

(E) optionally in the presence of one or more additives, auxiliaries and/or additions, and

(F) optionally in the presence of one or more monofunctional chain terminators,

**characterized in that** the reaction is effected in a solvent-free fashion and comprises or consists of the following steps:

1) providing and reacting a mixture made up of the total amount of component (A), a portion of component (B) and optionally a portion or the total amount of component (D), component (E) and/or component (F), to give an NCO-functional prepolymer, where in process step 1) there is a molar ratio of component (B) to component (A) of in the range from 1.1:1.0 to 5.0:1.0,

2) reacting the NCO-functional prepolymer from process step 1) with the total amount of component (C) to obtain an OH-functional prepolymer, optionally in the presence of a further portion of component (D), component (E) and/or component (F),

3) reacting the OH-functional prepolymer from process step 2) with the remaining amount of component (B) and any remaining amount of component (D), component (E) and/or component (F) to obtain the thermoplastically processible polyurethane, where over all process steps there is a molar ratio of component (B) to the sum total of component (A) and component (C) of in the range from 0.9:1.0 to 1.2:1.0,

where solvent-free means that the proportion of solvent is at most 1% by weight, based on the total weight of the reaction mixture, and a "solvent" is understood to mean a substance in which at least one of components A, B and C and, if present, D, E and/or F can be dissolved, dispersed, suspended or emulsified but which does not react with any of components A, B and C and, if present, D, E and/or F or with the polymer and the prepolymer(s).

**11.** Grip according to Claim 10, **characterized in that** the grip is a part of hand-held devices, electrical devices, sports equipment, electronic devices, suitcases, sports bags, leisure bags, vehicles, bicycles, tools, containers and/or writing implements.

**12.** Yarn and/or nonwoven comprising or containing at least one thermoplastically processible polyurethane polymer having a hardness of $\leq$ 60 Shore A determined in accordance with DIN ISO 7619-1 (2012-02-01), wherein the thermoplastically processible polyurethane polymer having a hardness of $\leq$ 60 Shore A is obtainable or obtained by reacting the following components

(A) one or more essentially linear polyether polyols and/or polyester polyols, wherein the total amount of component (A) has an average molecular weight Mn in the range from 500 g/mol to 5000 g/mol, where Mn has been calculated from the OH number, which has been determined in accordance with DIN53240, and where "essentially" means that at least 95 mol% of the total molar amount of the polyols of component A) consist of linear polyols,
(B) one or more diisocyanates selected from the group consisting of 2-methyl-1,5-diisocyanatopentane, 1,4-diisocyanatobutane (BDI), 1,5-diisocyanatopentane (PDI), 1,6-diisocyanatohexane (HDI), 2,2,4-trimethyl-1,6-diisocyanatohexane, 2,4,4-trimethyl-1,6-diisocyanatohexane or diphenylmethane diisocyanate isomer mixtures having a diphenylmethane 4,4'-diisocyanate content of > 96% by weight,
(C) one or more linear diols having a molecular weight of 62 g/mol to 500 g/mol,
(D) optionally in the presence of one or more catalysts,
(E) optionally in the presence of one or more additives, auxiliaries and/or additions, and
(F) optionally in the presence of one or more monofunctional chain terminators,
**characterized in that** the reaction is effected in a solvent-free fashion and comprises or consists of the following steps:

1) providing and reacting a mixture made up of the total amount of component (A), a portion of component (B) and optionally a portion or the total amount of component (D), component (E) and/or component (F), to give an NCO-functional prepolymer, where in process step 1) there is a molar ratio of component (B) to component (A) of in the range from 1.1:1.0 to 5.0:1.0,
2) reacting the NCO-functional prepolymer from process step 1) with the total amount of component (C) to obtain an OH-functional prepolymer, optionally in the presence of a further portion of component (D), component (E) and/or component (F),
3) reacting the OH-functional prepolymer from process step 2) with the remaining amount of component (B) and any remaining amount of component (D), component (E) and/or component (F) to obtain the thermoplastically processible polyurethane, where over all process steps there is a molar ratio of component (B) to the sum total of component (A) and component (C) of in the range from 0.9:1.0 to 1.2:1.0,

where solvent-free means that the proportion of solvent is at most 1% by weight, based on the total weight of the reaction mixture, and a "solvent" is understood to mean a substance in which at least one of components A, B and C and, if present, D, E and/or F can be dissolved, dispersed, suspended or emulsified but which does not react with any of components A, B and C and, if present, D, E and/or F or with the polymer and the prepolymer(s).

**13.** Yarn and/or nonwoven according to Claim 12, **characterized in that** the yarn and/or the nonwoven are parts of a shoe upper, of clothing, and/or of synthetic leather for furniture or automobile interior applications.

**14.** Use according to any of Claims 1-5, seal according to either of Claims 6 and 7, vibration damper, vibration isolator or connection isolator according to either of Claims 8 and 9, grip according to either of Claims 10 and 11, or yarn or nonwoven according to either of Claims 12 and 13, **characterized in that** the component (B) used is 2-methyl-1,5-diisocyanatopentane, 1,6-diisocyanatohexane (HDI), 2,2,4-trimethyl-1,6-diisocyanatohexane, diphenylmethane diisocyanate isomer mixtures having a diphenylmethane 4,4'-diisocyanate content of > 96% by weight or mixtures of at least 2 of these, preferably diphenylmethane diisocyanate isomer mixtures having a diphenylmethane 4,4'-diisocyanate content of > 96% by weight and particularly preferably diphenylmethane 4,4'-diisocyanate.

15. Use according to any of Claims 1-5 and 14, seal according to any of Claims 6-7 and 14, vibration damper, vibration isolator or connection isolator according to any of Claims 8-9 and 14, grip according to any of Claims 10-11 and 14, or yarn or nonwoven according to any of Claims 12-14, **characterized in that** the component (C) used is ethane-1,2-diol, butane-1,4-diol, hexane-1,6-diol, 1,4-di(hydroxyethyl)hydroquinone, cyclobutane-1,3-diol or mixtures of at least 2 of these, preferably ethane-1,2-diol, butane-1,4-diol, hexane-1,6-diol or mixtures of at least 2 of these, particularly preferably ethane-1,2-diol, butane-1,4-diol or mixtures of these.

16. Use according to any of Claims 1-5 and 14-15, seal according to any of Claims 6-7 and 14-15, vibration damper, vibration isolator or connection isolator according to any of Claims 8-9 and 14-15, grip according to any of Claims 10-11 and 14-15, or yarn or nonwoven according to any of Claims 12-15, **characterized in that** the thermoplastically processible polyurethane polymer has a hardness in the range from 35 Shore A to 60 Shore A, preferably in the range from 40 Shore A to 60 Shore A, particularly preferably in the range from 40 Shore A to 55 Shore A, determined in each case in accordance with DIN ISO 7619-1 (2012-02-01).

## Revendications

1. Utilisation d'un polymère de polyuréthane transformable de manière thermoplastique, présentant une dureté ≤ 60 Shore A, déterminée selon la norme DIN ISO 7619-1 (2012-02-01), ou d'une composition exempte de plastifiant contenant au moins un polymère de polyuréthane transformable de manière thermoplastique, présentant une dureté ≤ 60 Shore A, déterminée selon la norme DIN ISO 7619-1 (2012-02-01), pour la fabrication de

   a) joints d'étanchéité,
   b) amortisseurs de vibrations, isolateurs d'oscillations et/ou isolateurs de raccords,
   c) poignées et
   d) fils et/ou non-tissés,
   le polymère de polyuréthane transformable de manière thermoplastique, présentant une dureté ≤ 60 Shore A pouvant être obtenu ou étant obtenu par transformation des composants suivants

   (A) un ou plusieurs polyétherpolyols et/ou polyesterpolyols sensiblement linéaires, la quantité totale du composant (A) présentant un poids moléculaire moyen Mn dans la plage de 500 g/mole à 5000 g/mole, Mn étant calculé à partir de l'indice d'OH, qui a été déterminé selon la norme DIN53240 et "sensiblement" signifiant qu'au moins 95% en mole de la quantité totale des polyols du composant A) sont constitués de polyols linéaires,
   (B) un ou plusieurs diisocyanates choisis dans le groupe constitué par le 2-méthyl-1,5-diisocyanatopentane, le 1,4-diisocyanatobutane (BDI), le 1,5-diisocyanatopentane (PDI), le 1,6-diisocyanatohexane (HDI), le 2,2,4-triméthyl-1,6-diisocyanatohexane, le 2,4,4-triméthyl-1,6-diisocyanatohexane ou les mélanges d'isomères de diisocyanate de diphénylméthane présentant une teneur en diisocyanate de 4,4'-diphénylméthane > 96% en poids,
   (C) un ou plusieurs diols linéaires présentant un poids moléculaire de 62 g/mole à 500 g/mole,
   (D) le cas échéant en présence d'un ou de plusieurs catalyseurs,
   (E) le cas échéant en présence d'un ou de plusieurs additifs, agents auxiliaires et/ou adjuvants et
   (F) le cas échéant en présence d'un ou de plusieurs agents monofonctionnels d'interruption de chaînes,

   **caractérisée en ce que** la transformation a lieu sans solvant et comprend ou est constituée par les étapes suivantes :

   1) mise à disposition et transformation d'un mélange constitué par la quantité totale du composant (A), une quantité partielle du composant (B) et le cas échéant une quantité partielle ou la quantité totale du composant (D), du composant (E) et/ou du composant (F) en un prépolymère à fonctionnalité NCO, où, dans l'étape de procédé 1), un rapport molaire du composant (B) au composant (A) se situe dans la plage de 1,1:1,0 à 5,0:1,0,

2) transformation du prépolymère à fonctionnalité NCO de l'étape de procédé 1) avec la quantité totale du composant (C) avec obtention d'un prépolymère à fonctionnalité OH, le cas échéant en présence d'une autre quantité partielle du composant (D), du composant (E) et/ou du composant (F),

3) transformation du prépolymère à fonctionnalité OH de l'étape de procédé 2) avec la quantité résiduelle du composant (B) et le cas échéant la quantité résiduelle du composant (D), du composant (E) et/ou du composant (F) avec obtention du polyuréthane transformable de manière thermoplastique, où, sur toutes les étapes de procédé, un rapport molaire du composant (B) à la somme du composant (A) et du composant (C) se situe dans la plage de 0,9:1,0 à 1,2:1,0,

sans solvant signifiant que la proportion de solvant est d'au plus 1% en poids par rapport au poids total du mélange réactionnel et "solvant" désignant une substance dans laquelle au moins l'un des composants A, B et C et le cas échéant D, E et/ou F peut être dissous, dispersé, mis en suspension ou émulsionné, mais qui ne réagit pas avec l'un des composants A, B, et C et le cas échéant D, E et/ou F ou avec le polymère et le(s) prépolymère(s).

2. Utilisation selon la revendication 1, **caractérisée en ce que** les joints d'étanchéité sont des joints de boîtier surmoulés directement d'appareils électriques et électroniques et/ou des profilés d'étanchéité extrudés.

3. Utilisation selon la revendication 1, **caractérisée en ce que** les amortisseurs de vibrations, les isolateurs d'oscillations et/ou les isolateurs de raccords sont des pieds pour des appareils électriques et électroniques, des pieds de machine, une protection de coins et/ou de bords, des amortisseurs pour les cordes de raquettes de tennis et/ou de squash, des composants souples pour des enveloppes de protection de téléphones mobiles et/ou des pieds de valises, de sacs de sport ou de sacs de loisir.

4. Utilisation selon la revendication 1, **caractérisée en ce que** les poignées font partie d'appareils portatifs, d'appareils électriques, d'appareils de sport, d'appareils électroniques, de valises, de sacs de sport, de sacs de loisir, de véhicules, de vélos, d'outils, de récipients et/ou de dispositifs d'écriture.

5. Utilisation selon la revendication 1, **caractérisée en ce que** le fil et/ou le non-tissé fait partie d'une empeigne, de revêtements, de cuir synthétique, en particulier du cuir synthétique pour des meubles ou des applications internes d'automobiles.

6. Joint d'étanchéité comprenant ou contenant au moins un polymère de polyuréthane transformable de manière thermoplastique, présentant une dureté ≤ 60 Shore A déterminée selon la norme DIN ISO 7619-1 (2012-02-01), le polymère de polyuréthane transformable de manière thermoplastique, présentant une dureté ≤ 60 Shore A pouvant être obtenu ou étant obtenu par transformation des composants suivants

(A) un ou plusieurs polyétherpolyols et/ou polyesterpolyols sensiblement linéaires, la quantité totale du composant (A) présentant un poids moléculaire moyen Mn dans la plage de 500 g/mole à 5000 g/mole, Mn étant calculé à partir de l'indice d'OH, qui a été déterminé selon la norme DIN53240 et "sensiblement" signifiant qu'au moins 95% en mole de la quantité totale des polyols du composant A) sont constitués de polyols linéaires,

(B) un ou plusieurs diisocyanates choisis dans le groupe constitué par le 2-méthyl-1,5-diisocyanatopentane, le 1,4-diisocyanatobutane (BDI), le 1,5-diisocyanatopentane (PDI), le 1,6-diisocyanatohexane (HDI), le 2,2,4-triméthyl-1,6-diisocyanatohexane, le 2,4,4-triméthyl-1,6-diisocyanatohexane ou les mélanges d'isomères de diisocyanate de diphénylméthane présentant une teneur en diisocyanate de 4,4'-diphénylméthane > 96% en poids,

(C) un ou plusieurs diols linéaires présentant un poids moléculaire de 62 g/mole à 500 g/mole,

(D) le cas échéant en présence d'un ou de plusieurs catalyseurs,

(E) le cas échéant en présence d'un ou de plusieurs additifs, agents auxiliaires et/ou adjuvants et

(F) le cas échéant en présence d'un ou de plusieurs agents monofonctionnels d'interruption de chaînes, **caractérisée en ce que** la transformation a lieu sans solvant et comprend ou est constituée par les étapes suivantes :

1) mise à disposition et transformation d'un mélange constitué par la quantité totale du composant (A), une quantité partielle du composant (B) et le cas échéant une quantité partielle ou la quantité totale du composant (D), du composant (E) et/ou du composant (F) en un prépolymère à fonctionnalité NCO, où, dans l'étape de procédé 1), un rapport molaire du composant (B) au composant (A) se situe dans la plage de 1,1:1,0 à 5,0:1,0,

2) transformation du prépolymère à fonctionnalité NCO de l'étape de procédé 1) avec la quantité totale du composant (C) avec obtention d'un prépolymère à fonctionnalité OH, le cas échéant en présence d'une autre quantité partielle du composant (D), du composant (E) et/ou du composant (F),

3) transformation du prépolymère à fonctionnalité OH de l'étape de procédé 2) avec la quantité résiduelle du composant (B) et le cas échéant la quantité résiduelle du composant (D), du composant (E) et/ou du composant (F) avec obtention du polyuréthane transformable de manière thermoplastique, où, sur toutes les étapes de procédé, un rapport molaire du composant (B) à la somme du composant (A) et du composant (C) se situe dans la plage de 0,9:1,0 à 1,2:1,0,

sans solvant signifiant que la proportion de solvant est d'au plus 1% en poids par rapport au poids total du mélange réactionnel et "solvant" désignant une substance dans laquelle au moins l'un des composants A, B et C et le cas échéant D, E et/ou F peut être dissous, dispersé, mis en suspension ou émulsionné, mais qui ne réagit pas avec l'un des composants A, B, et C et le cas échéant D, E et/ou F ou avec le polymère et le(s) prépolymère(s).

7. Joint d'étanchéité selon la revendication 6, **caractérisé en ce que** le joint d'étanchéité est un joint de boîtier surmoulé directement d'appareils électriques et électroniques et/ou un profilé d'étanchéité extrudé.

8. Amortisseur de vibrations, isolateur d'oscillations et/ou isolateur de raccords comprenant ou contenant au moins un polymère de polyuréthane transformable de manière thermoplastique, présentant une dureté $\leq$ 60 Shore A déterminée selon la norme DIN ISO 7619-1 (2012-02-01), le polymère de polyuréthane transformable de manière thermoplastique, présentant une dureté $\leq$ 60 Shore A pouvant être obtenu ou étant obtenu par transformation des composants suivants

(A) un ou plusieurs polyétherpolyols et/ou polyesterpolyols sensiblement linéaires, la quantité totale du composant (A) présentant un poids moléculaire moyen Mn dans la plage de 500 g/mole à 5000 g/mole, Mn étant calculé à partir de l'indice d'OH, qui a été déterminé selon la norme DIN53240 et "sensiblement" signifiant qu'au moins 95% en mole de la quantité totale des polyols du composant A) sont constitués de polyols linéaires,

(B) un ou plusieurs diisocyanates choisis dans le groupe constitué par le 2-méthyl-1,5-diisocyanatopentane, le 1,4-diisocyanatobutane (BDI), le 1,5-diisocyanatopentane (PDI), le 1,6-diisocyanatohexane (HDI), le 2,2,4-triméthyl-1,6-diisocyanatohexane, le 2,4,4-triméthyl-1,6-diisocyanatohexane ou les mélanges d'isomères de diisocyanate de diphénylméthane présentant une teneur en diisocyanate de 4,4'-diphénylméthane > 96% en poids,

(C) un ou plusieurs diols linéaires présentant un poids moléculaire de 62 g/mole à 500 g/mole,

(D) le cas échéant en présence d'un ou de plusieurs catalyseurs,

(E) le cas échéant en présence d'un ou de plusieurs additifs, agents auxiliaires et/ou adjuvants et

(F) le cas échéant en présence d'un ou de plusieurs agents monofonctionnels d'interruption de chaînes,

**caractérisée en ce que** la transformation a lieu sans solvant et comprend ou est constituée par les étapes suivantes :

1) mise à disposition et transformation d'un mélange constitué par la quantité totale du composant (A), une quantité partielle du composant (B) et le cas échéant une quantité partielle ou la quantité totale du composant (D), du composant (E) et/ou du composant (F) en un prépolymère à fonctionnalité NCO, où, dans l'étape de procédé 1), un rapport molaire du composant (B) au composant (A) se situe dans la plage de 1,1:1,0 à 5,0:1,0,

2) transformation du prépolymère à fonctionnalité NCO de l'étape de procédé 1) avec la quantité totale du composant (C) avec obtention d'un prépolymère à fonctionnalité OH, le cas échéant en présence d'une autre quantité partielle du composant (D), du composant (E) et/ou du composant (F),

3) transformation du prépolymère à fonctionnalité OH de l'étape de procédé 2) avec la quantité résiduelle du composant (B) et le cas échéant la quantité résiduelle du composant (D), du composant (E) et/ou du composant (F) avec obtention du polyuréthane transformable de manière thermoplastique, où, sur toutes les étapes de procédé, un rapport molaire du composant (B) à la somme du composant (A) et du composant (C) se situe dans la plage de 0,9:1,0 à 1,2:1,0,

sans solvant signifiant que la proportion de solvant est d'au plus 1% en poids par rapport au poids total du mélange réactionnel et "solvant" désignant une substance dans laquelle au moins l'un des composants A, B et C et le cas échéant D, E et/ou F peut être dissous, dispersé, mis en suspension ou émulsionné, mais qui ne réagit pas avec l'un des composants A, B, et C et le cas échéant D, E et/ou F ou avec le polymère et le(s) prépolymère(s).

9. Amortisseur de vibrations, isolateur d'oscillations et/ou isolateur de raccords selon la revendication 8, caractérisé(s) en ce que l'amortisseur de vibrations, l'isolateur d'oscillations et/ou l'isolateur de raccords est/sont un pied pour des appareils électriques et électroniques, un pied de machine, une protection de coins et/ou de bords, un amortisseur pour les cordes de raquettes de tennis et/ou de squash, un composant souple pour des enveloppes de protection de téléphones mobiles et/ou un pied de valises, de sacs de sport ou de sacs de loisir.

10. Poignée d'étanchéité comprenant ou contenant au moins un polymère de polyuréthane transformable de manière thermoplastique, présentant une dureté ≤ 60 Shore A déterminée selon la norme DIN ISO 7619-1 (2012-02-01), le polymère de polyuréthane transformable de manière thermoplastique, présentant une dureté ≤ 60 Shore A pouvant être obtenu ou étant obtenu par transformation des composants suivants

(A) un ou plusieurs polyétherpolyols et/ou polyesterpolyols sensiblement linéaires, la quantité totale du composant (A) présentant un poids moléculaire moyen Mn dans la plage de 500 g/mole à 5000 g/mole, Mn étant calculé à partir de l'indice d'OH, qui a été déterminé selon la norme DIN53240 et "sensiblement" signifiant qu'au moins 95% en mole de la quantité totale des polyols du composant A) sont constitués de polyols linéaires,
(B) un ou plusieurs diisocyanates choisis dans le groupe constitué par le 2-méthyl-1,5-diisocyanatopentane, le 1,4-diisocyanatobutane (BDI), le 1,5-diisocyanatopentane (PDI), le 1,6-diisocyanatohexane (HDI), le 2,2,4-triméthyl-1,6-diisocyanatohexane, le 2,4,4-triméthyl-1,6-diisocyanatohexane ou les mélanges d'isomères de diisocyanate de diphénylméthane présentant une teneur en diisocyanate de 4,4'-diphénylméthane > 96% en poids,
(C) un ou plusieurs diols linéaires présentant un poids moléculaire de 62 g/mole à 500 g/mole,
(D) le cas échéant en présence d'un ou de plusieurs catalyseurs,
(E) le cas échéant en présence d'un ou de plusieurs additifs, agents auxiliaires et/ou adjuvants et
(F) le cas échéant en présence d'un ou de plusieurs agents monofonctionnels d'interruption de chaînes,
**caractérisée en ce que** la transformation a lieu sans solvant et comprend ou est constituée par les étapes suivantes :

1) mise à disposition et transformation d'un mélange constitué par la quantité totale du composant (A), une quantité partielle du composant (B) et le cas échéant une quantité partielle ou la quantité totale du composant (D), du composant (E) et/ou du composant (F) en un prépolymère à fonctionnalité NCO, où, dans l'étape de procédé 1), un rapport molaire du composant (B) au composant (A) se situe dans la plage de 1,1:1,0 à 5,0:1,0,
2) transformation du prépolymère à fonctionnalité NCO de l'étape de procédé 1) avec la quantité totale du composant (C) avec obtention d'un prépolymère à fonctionnalité OH, le cas échéant en présence d'une autre quantité partielle du composant (D), du composant (E) et/ou du composant (F),
3) transformation du prépolymère à fonctionnalité OH de l'étape de procédé 2) avec la quantité résiduelle du composant (B) et le cas échéant la quantité résiduelle du composant (D), du composant (E) et/ou du composant (F) avec obtention du polyuréthane transformable de manière thermoplastique, où, sur toutes les étapes de procédé, un rapport molaire du composant (B) à la somme du composant (A) et du composant (C) se situe dans la plage de 0,9:1,0 à 1,2:1,0,

sans solvant signifiant que la proportion de solvant est d'au plus 1% en poids par rapport au poids total du mélange réactionnel et "solvant" désignant une substance dans laquelle au moins l'un des composants A, B et C et le cas échéant D, E et/ou F peut être dissous, dispersé, mis en suspension ou émulsionné, mais qui ne réagit pas avec l'un des composants A, B, et C et le cas échéant D, E et/ou F ou avec le polymère et le(s) prépolymère(s).

11. Poignée selon la revendication 10, **caractérisée en ce que** la poignée fait partie d'appareils portatifs, d'appareils électriques, d'appareils de sport, d'appareils électroniques, de valises, de sacs de sport, de sacs de loisir, de véhicules, de vélos, d'outils, de récipients et/ou de dispositifs d'écriture.

12. Fil et/ou non-tissé comprenant ou contenant au moins un polymère de polyuréthane transformable de manière thermoplastique, présentant une dureté ≤ 60 Shore A déterminée selon la norme DIN ISO 7619-1 (2012-02-01), le polymère de polyuréthane transformable de manière thermoplastique, présentant une dureté ≤ 60 Shore A pouvant être obtenu ou étant obtenu par transformation des composants suivants

(A) un ou plusieurs polyétherpolyols et/ou polyesterpolyols sensiblement linéaires, la quantité totale du composant (A) présentant un poids moléculaire moyen Mn dans la plage de 500 g/mole à 5000 g/mole, Mn étant calculé à partir de l'indice d'OH, qui a été déterminé selon la norme DIN53240 et "sensiblement" signifiant qu'au moins 95% en mole de la quantité totale des polyols du composant A) sont constitués de polyols linéaires,

(B) un ou plusieurs diisocyanates choisis dans le groupe constitué par le 2-méthyl-1,5-diisocyanatopentane, le 1,4-diisocyanatobutane (BDI), le 1,5-diisocyanatopentane (PDI), le 1,6-diisocyanatohexane (HDI), le 2,2,4-triméthyl-1,6-diisocyanatohexane, le 2,4,4-triméthyl-1,6-diisocyanatohexane ou les mélanges d'isomères de diisocyanate de diphénylméthane présentant une teneur en diisocyanate de 4,4'-diphénylméthane > 96% en poids,

(C) un ou plusieurs diols linéaires présentant un poids moléculaire de 62 g/mole à 500 g/mole,

(D) le cas échéant en présence d'un ou de plusieurs catalyseurs,

(E) le cas échéant en présence d'un ou de plusieurs additifs, agents auxiliaires et/ou adjuvants et

(F) le cas échéant en présence d'un ou de plusieurs agents monofonctionnels d'interruption de chaînes,

**caractérisée en ce que** la transformation a lieu sans solvant et comprend ou est constituée par les étapes suivantes :

1) mise à disposition et transformation d'un mélange constitué par la quantité totale du composant (A), une quantité partielle du composant (B) et le cas échéant une quantité partielle ou la quantité totale du composant (D), du composant (E) et/ou du composant (F) en un prépolymère à fonctionnalité NCO, où, dans l'étape de procédé 1), un rapport molaire du composant (B) au composant (A) se situe dans la plage de 1,1:1,0 à 5,0:1,0,

2) transformation du prépolymère à fonctionnalité NCO de l'étape de procédé 1) avec la quantité totale du composant (C) avec obtention d'un prépolymère à fonctionnalité OH, le cas échéant en présence d'une autre quantité partielle du composant (D), du composant (E) et/ou du composant (F),

3) transformation du prépolymère à fonctionnalité OH de l'étape de procédé 2) avec la quantité résiduelle du composant (B) et le cas échéant la quantité résiduelle du composant (D), du composant (E) et/ou du composant (F) avec obtention du polyuréthane transformable de manière thermoplastique, où, sur toutes les étapes de procédé, un rapport molaire du composant (B) à la somme du composant (A) et du composant (C) se situe dans la plage de 0,9:1,0 à 1,2:1,0,

sans solvant signifiant que la proportion de solvant est d'au plus 1% en poids par rapport au poids total du mélange réactionnel et "solvant" désignant une substance dans laquelle au moins l'un des composants A, B et C et le cas échéant D, E et/ou F peut être dissous, dispersé, mis en suspension ou émulsionné, mais qui ne réagit pas avec l'un des composants A, B, et C et le cas échéant D, E et/ou F ou avec le polymère et le(s) prépolymère(s).

13. Fil et/ou non-tissé selon la revendication 12, caractérisé(s) en ce que le fil et/ou le non-tissé fait/font partie d'une empeigne, de revêtements, de cuir synthétique, en particulier du cuir synthétique pour des meubles ou des applications internes d'automobiles.

14. Utilisation selon l'une des revendications 1-5, joint d'étanchéité selon l'une des revendications 6-7, amortisseur de vibrations, isolateur d'oscillations ou isolateur de raccords selon l'une des revendications 8-9, poignée selon l'une des revendications 10-11 ou fil ou non-tissé selon l'une des revendications 12-13, caractérisé(e) en ce qu'on utilise, comme composant (B), du 2-méthyl-1,5-diisocyanatopentane, du 1,6-diisocyanatohexane (HDI), du 2,2,4-triméthyl-1,6-diisocyanatohexane, des mélanges d'isomères de diisocyanate de diphénylméthane présentant une teneur en diisocyanate de 4,4'-diphénylméthane >96% en poids ou des mélanges d'au moins 2 de ceux-ci, de préférence des mélanges des isomères de diisocyanate de diphénylméthane présentant une teneur en diisocyanate de 4,4'-diphénylméthane >96% en poids et de manière particulièrement préférée du diisocyanate de 4,4'-diphénylméthane.

15. Utilisation selon l'une des revendications 1-5 et 14, joint d'étanchéité selon l'une des revendications 6-7 et 14, amortisseur de vibrations, isolateur d'oscillations ou isolateur de raccords selon l'une des revendications 8-9 et 14, poignée selon l'une des revendications 10-11 et 14 ou fil ou non-tissé selon l'une des revendications 12-14, caractérisé(e) en ce qu'on utilise, comme composant (C), du 1,2-éthanediol, du 1,4-butanediol, du 1,6-hexanediol, de la 1,4-di-(hydroxyéthyl)-hydroquinone, du 1,3-cyclobutanediol ou des mélanges d'au moins 2 de ceux-ci, de préférence du 1,2-éthanediol, du 1,4-butanediol, du 1,6-hexanediol ou des mélanges d'au moins 2 de ceux-ci, de manière particulièrement préférée du 1,2-éthanediol, du 1,4-butanediol ou des mélanges de ceux-ci.

16. Utilisation selon l'une des revendications 1-5 et 14-15, joint d'étanchéité selon l'une des revendications 6-7 et 14-15, amortisseur de vibrations, isolateur d'oscillations ou isolateur de raccords selon l'une des revendications 8-9 et 14-15, poignée selon l'une des revendications 10-11 et 14-15 ou fil ou non-tissé selon l'une des revendications 12-15, caractérisé(e) en ce que le polymère de polyuréthane transformable de manière thermoplastique présente une dureté dans la plage de 35 Shore A à 60 Shore A, de préférence dans la plage de 40 Shore A à 60 Shore A, de manière particulièrement préférée dans la plage de 40 Shore A à 55 Shore A, à chaque fois déterminée selon la norme DIN ISO 7619-1 (2012-02-01).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1057018 A
- DE 1964834 A1
- DE 2059570 A1
- EP 1757632 A
- EP 1338614 A
- EP 1932863 A
- US 3915923 A

- CN 101875713 A
- CN 106750159 A
- DE 2901774 A
- DE 1964834 A
- DE 059570 A2
- US 5795948 A

**In der Beschreibung aufgeführte Nicht-Patentliteratur**

- *Kunststoffe,* 1978, vol. 68, 819-825
- *Kautschuk, Gummi, Kunststoffe,* 1982, vol. 35, 568-584

- High Polymers. **J.H. SAUNDERS ; K.C. FRISCH.** Polyurethane. Interscience Publishers, 1962, vol. XVI
- Taschenbuch der Kunststoff-Additive. Hanser Verlag, 1989, vol. 3